(19) Europäisches Patentamt
European Patent Office
Office européen des brevets

(11) Veröffentlichungsnummer: **0 306 892 B1**

(12) # EUROPÄISCHE PATENTSCHRIFT

(45) Veröffentlichungstag der Patentschrift: **18.12.91**

(51) Int. Cl.5: **G07F 7/10**, G06K 19/06

(21) Anmeldenummer: **88114507.2**

(22) Anmeldetag: **06.09.88**

(54) **Schaltungsanordnung mit einer zumindest einen Teil der Anordnung enthaltenden Karte für Geschäfts-, Identifizierungs-und/oder Betätigungszwecke.**

(30) Priorität: **08.09.87 US 94379**

(43) Veröffentlichungstag der Anmeldung:
**15.03.89 Patentblatt 89/11**

(45) Bekanntmachung des Hinweises auf die Patenterteilung:
**18.12.91 Patentblatt 91/51**

(84) Benannte Vertragsstaaten:
**CH DE FR GB IT LI**

(56) Entgegenhaltungen:

| | |
|---|---|
| EP-A- 0 159 539 | EP-A- 0 218 176 |
| WO-A-83/03018 | DE-A- 3 704 814 |
| DE-C- 1 945 777 | US-A- 3 614 316 |
| US-A- 3 996 450 | US-A- 4 105 156 |
| US-A- 4 192 006 | US-A- 4 204 113 |
| US-A- 4 277 837 | US-A- 4 305 059 |
| US-A- 4 385 231 | US-A- 4 405 829 |
| US-A- 4 443 027 | US-A- 4 454 414 |
| US-A- 4 460 965 | US-A- 4 523 087 |
| US-A- 4 523 297 | US-A- 4 534 012 |
| US-A- 4 614 861 | US-A- 4 634 845 |
| US-A- 4 656 342 | US-A- 4 705 211 |
| US-A- 4 734 568 | |

(73) Patentinhaber: **Dethloff, Jürgen**
**Brandstücken 35**
**W-2000 Hamburg 53(DE)**

(72) Erfinder: **Dethloff, Jürgen**
**Brandstücken 35**
**W-2000 Hamburg 53(DE)**
Erfinder: **Hinneberg, Christian**
**Ballindamm 11**
**W-2000 Hamburg 1(DE)**

(74) Vertreter: **Knoblauch, Ulrich, Dr.-Ing.**
**Kühhornshofweg 10**
**W-6000 Frankfurt am Main 1(DE)**

**EP 0 306 892 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltungsanordnung mit einer zumindest einen Teil der Anordnung enthaltenden Karte für Geschäfts-, Identifizierungs- und/oder Betätigungszwecke; mit einem in der Karte enthaltenen Karteninhaber-Speichermittel zum Speichern eines persönlichen Karteninhaber-Berechtigungsmerkmals; einem in der Karte enthaltenen programmierbaren Speichermittel zum Speichern wenigstens eines weitesen Berechtigungsmerkmals und einem Authentikations-Prüfmittel zur Authentikation eines persönlichen Berechtigungsmerkmals als dem gespeicherten persönlichen Karteninhaber-Berichtigungsmerkmal entsprechend.

Die Erfindung liegt im wesentlichen auf dem Gebiet der elektronischen Verarbeitungs-, Transaktionsund Identifikationssysteme, insbesondere tragbarer elektronischer Verarbeitungs- und Transaktionseinrichtungen, die elektronische Karten, Schlüssel und dergleichen sowie zugehörige stationäre Einrichtungen, z.B. Datenendstationen, Codier- und Transaktionseinrichtungen, aufweisen.

Die tragbaren Einrichtungen werden nachstehend auch als "Karten", "M-Karten" ("M" = "Mehrbenutzer") oder "Module" bezeichnet. Bei diesen Karten handelt es sich um Einrichtungen aus thermoplastischem Kunststoff, die integrierte Schaltungen aufweisen und auch als "intelligente Karten" ("smart cards") oder "Chip-Karten" bezeichnet werden. Diese Karten enthalten elektronische Bauteile in Mikrobauweise, d.h. integrierte Schaltungen. Einrichtungen dieser Art sind in der DE-PS 19 45 777 angegeben.

Die integrierten (Halbleiter-)Schaltungen in derartigen Karten bestehen im wesentlichen aus zwei Grundeinheiten: Logikbaueinheiten und Speichern. Vor dem Aufkommen dieser Karten waren alle maschinell verarbeitbaren oder machinell lesbaren Karten nur mit passiven Speichermitteln versehen. So konnten Informationen auf einem Magnetstreifen aufgezeichnet oder abgelesen werden. Ferner konnte ein Teil der Informationen auf dem Streifen gelöscht und ein anderer, z.B. ein aktualisierter Informationsteil, wieder aufgezeichnet werden. Die Kapazität magnetischer Medien auf Karten ist jedoch auf einige hundert Informationsbits beschränkt.

Eine Chips aufweisende Karte bietet im wesentlichen zwei Vorteile: Die Logikbaueinheiten machen die Karte aktiv, d.h. es können Informationen innerhalb der Karte verarbeitet, insbesondere errechnet, oder mit anderen Informationen und dergleichen verglichen werden. Der zweite Vorteil ergibt sich durch die Verwendung von Halbleiter-Speichern, deren Speicherkapazität ein Vielfaches der Speicherkapazität magnetischer Medien auf Karten beträgt und die sich auf verschiedene Weise programmieren lassen (um ihren Inhalt nach dem Einschreiben unzugänglich, unveränderlich usw. zu machen).

Voraussichtlich werden Chip-Karten in absehbarer Zeit in größerem Umfang eingeführt und die derzeit weitverbreiteten Magnetstreifen-Karten ersetzen. Derzeit übliche Karten, wie Magnetstreifen- und andere Karten, sind "Einzelbenutzer-Karten", d.h. nur einem Karteninhaber zugeordnet.

Die auf dem Magnetstreifen derzeitiger Magnetstreifenkarten, die maschinell verarbeitbar sind, aufgezeichnete Information enthält als einen Teil der Information eine persönliche Kennung des rechtmäßigen Karteninhabers. Häufig wird als derartige persönliche Kennung eine PIN (persönliche Identifizierungsnummer) verwendet. Sie ist verschlüsselt (codiert) und wird bei Benutzung der Karte in einer Leseeinrichtung decodiert bzw. entschlüsselt. Um die Identität des Benutzers mit dem rechtmäßigen Besitzer sicherzustellen, wird die PIN vom Magnetstreifen abgelesen und dann entschlüsselt. Die PIN wird dann im Leser mit der vom Benutzer in den Leser eingegebenen PIN verglichen.

Der Algorithmus oder Code zur Entschlüsselung der von der Karte abgelesenen codierten PIN ist in allen Lesegeräten verfügbar. Daher ist es technisch versierten Kriminellen möglich, den Algorithmus oder den Entschlüsselungsmodul oder ein ganzes Lesegerät an sich zu bringen, um aus gestohlenen Karten PINs illegal zu entschlüsseln oder herauszufinden, wie falsche PINs verschlüsselt und in den Speicher verlorener oder gestohlener Karten eingespeichert werden können.

Um diesen Nachteil zu vermeiden, sind in der US-PS 41 05 156 Speichermittel angegeben, die unzugänglich und integral in einer Karte eingebettet sind, um dann Informationen einzugeben und zu speichern, und ferner ist der Inhalt des Speichers nur innerhalb der Karte verfügbar.

Diese Patentschrift gibt ferner Bauteile an, die in der Karte enthalten sind und in Abhängigkeit von Eingaben über ein Lesegerät betätigt werden, um die Identität und Berechtigung eines Benutzers der Karte zu prüfen. Der Vergleich der in der Karte gespeicherten PIN mit der bei der Benutzung der Karte eingegebenen PIN wird daher nicht mehr in dem Leser (Lesegerät) ausgeführt. Infolgedessen kann aus dem Leser kein Algorithmus abgeleitet oder gestohlen werden, noch ist es sinnvoll, einen Leser an sich zu bringen, um PINs aus gestohlenen Karten abzuleiten oder PINs für gefälschte Karten illegal zu verschlüsseln.

Die PIN muß jedoch weiterhin in die Karte eingegeben werden, um sie über den Leser zu prüfen, indem die PIN auf der PIN-Tastatur des Lesers eingetastet wird. Sodann ist es möglich, die Leitung von der PIN-Tastatur im Leser zu den Anschlüssen der Karte unerlaubt anzuzapfen. Dies gestattet einem Kriminellen die Ermittlung individueller PINs aus bestimmten Karten.

Um diese Gefahr zu vermeiden, sind in der US-PS 36 41 316 Mittel angegeben, die in der Karte eingebettet sind, um die PIN direkt in die Karte einzugeben. Dadurch wird außerdem die Möglichkeit ausgeschlossen, daß eine dritte Person unerlaubterweise die PIN ausspäht, wenn diese über die Tastatur des Lesers durch den rechtmäßigen Kartenbesitzer eingegeben wird.

Beim Prüfen (Vergleichen der PINs) erzeugt das Prüfmittel in der Karte ein Signal, das anzeigt, ob die eingegebene PIN mit der gespeicherten PIN übereinstimmt oder nicht.

Allerdings können Karten gefälscht werden, so daß sie "positive" Signale erzeugen. Daher muß zuvor eine Kartenauthentikationsprüfung erfolgen. Nur eine authentische, d.h. gültige Karte, kann ein echtes Identitätsprüfsignal erzeugen.

Solche Authentikationsprüfungen werden sehr wahrscheinlich auf sogenannten öffentlichen Schlüsseln oder "Trapdoor"-Algorithmen beruhen, wie es in der US-PS 44 05 829 angegeben ist. Bei dieser Verifikationsart ist ein Geheimschlüssel fest in die Karte eingeschlossen, d.h. er muß in einen Speicher, der sich in der Karte befindet, in der Weise geladen sein, daß er nicht aus der Karte ausgelesen und nach dem Laden nicht geändert werden kann und nur innerhalb der Karte zur Verarbeitung bei der Durchführung einer Authentifikationsprüfung verfügbar ist.

Ein Schlüssel in Form einer Karte mit einem Magnetstreifen, der vom Herausgeber (Aussteller) bei der Ausgabe (Ausstellung) für eine vorbestimmte Gültigkeitsdauer programmiert werden kann, um Türen zu entriegeln, z.B. in einem Hotel, ist aus der US-PS 43 85 231 bekannt. Die US-PS 45 23 297 offenbart eine tragbare, in der Hand zu haltende Maschine, die eine Tastatur, eine Anzeige, einen Mikroprozessor und einen Speicher aufweist und einen Träger in Form einer Karte aus Kunststoff aufnimmt, die auch einen Mikroprozessor und einen Speicher zur Durchführung eines Dialogs zwischen der Maschine und dem Träger aufweist. Ferner sei verwiesen auf die US-PS 43 05 059, in der ein System zum Transferieren von Guthaben mittels tragbarer Module angegeben ist, die eine Tastatur und eine Anzeige aufweisen, auf die US-PS 46 14 861, in der eine einteilige abgeschlossene (autonome) Karte mit Tastatur und Anzeige angegeben ist, auf die US-PS 39 96 450, in der eine Bargeldausgabevorrichtung mit PIN-Wechselfunktion angegeben ist, und auf die US-PS 44 60 965 verwiesen, in der das Laden eines Unter-Transaktionsspeichers aus einem Hauptkreditspeicher einer tragbaren Einrichtung vorgeschlagen wird.

In der US-PS 41 05 156 sind Speicher angegeben, die nur einmal ladbar sind und deren Inhalt nur innerhalb der Karte verfügbar ist.

Mithin sind integrierte Schaltungen in einer Karte, die Speicher aufweisen, deren Inhalt nur innerhalb der Karte verfügbar ist, Bauteile in einer Karte, die auf eine Eingabe von außerhalb der Karte ansprechen, und in einer Karte eingebettete Mittel zur unmittelbaren Eingabe von Informationen in die Karte Stand der Technik.

Eine Karte der gattungsgemäßen Art, wie sie aus der US-PS 46 56 342 bekannt ist, enthält einen Speicher, der in mehrere Bereiche unterteilt ist, die jeweils ein eigenes codiertes Zugriffzeichen speichern und, ein Programmiermittel und ein Authentikationsmittel aufweisen. Die Speicherbereiche sind mehreren Dienstleistungen zugeordnet. Sobald die Karte initialisiert und von einer ersten Ausgabeorganisation ausgegeben (ausgestellt) worden ist, kann der Karteninhaber von einer oder mehreren weiteren Ausgabeorganisationen, die verschiedene Dienstleistungen anbieten, die Berechtigung anfordern, die Karte zur Inanspruchnahme dieser Dienstleistungen zu benutzen. Das autorisierende Unternehmen dieser weiteren Ausgabeorganisation gibt dann ein Öffnungswort für die Dienstleistung in einen der leeren Speicherbereiche ein. Alternativ kann die erste Ausgabeorganisation Geheimnummern in Speicherbereichen einspeichern, die weitere Dienstleistungen zusätzlicher Ausgabeorganisationen kennzeichnen. In diesem Fall sind die neuen Dienstleistungen durch die erste Ausgabeorganisation vorherbestimmt und in einer vorherbestimmten Reihenfolge angeordnet. Um Zugang zu der durch eine Ausgabeorganisation (ein Autorisierungsunternehmen) angebotenen Dienstleistung zu erhalten, muß die Karte ein Autorisierungswort enthalten, das diesem Autorisierungsunternehmen zugeordnet ist. Wenn der Speicher in der Karte bereits in einem Speicherbereich eine Geheimnummer enthält, die eine zusätzliche Dienstleistung bestimmt, kann der Karteninhaber zu einem Lese/Aufzeichnungs-Gerät für die Karte gehen, seine Karte einführen und eine Kommunikationsverbindung mit dem autorisierenden Unternehmen herstellen, um ein in dem Speicher einzuspeicherndes Autorisierungswort anzufordern. Das autorisierende Unternehmen hat eine entsprechende Geheimnummer in ihrem Speicher und löst dann einen Dialog zwischen sich und der Karte aus. Sowohl die Karte als auch das autorisierende Unternehmen führen bestimmte Rechnungen aus und vergleichen die Ergebnisse, um zu prüfen, ob die Geheimnummern der Karte und die des autorisierenden Unternehmens in einem vorbestimmten Ergebnis übereinstimmen. Bei "positivem" Vergleich gibt das autorisierende Unternehmen das Autorisierungswort in den betreffenden Bereich des Speichers der Karte ein. Wenn der Karteninhaber einen bestimmten Teil oder Betrag der angebotenen Dienstleistung anfordert oder eine erneute Kreditierung seiner Karte nach Aufbrauch des ursprünglichen Teils oder Betrags wünscht, muß er parallel zum Dialog zwischen Karte und Automat eine Telefonverbindung mit einer Bedienungsperson des autorisierenden Unternehmens herstellen, um diese möglichst zu informieren.

Bei diesem Verfahren sind mithin alle in den Bereichen des Speichers gespeicherten Daten durch eine dritte Partei vorherbestimmt, wobei die Daten durch das unabhängige autorisierende Unternehmen, das nicht durch den Benutzer kontrollierbar ist, in die Karte übertragen werden. Der Karteninhaber ist nicht befugt, die spezielle Dienstleistung, die er wünscht, zu bestimmen. Er muß die nächste in der Reihenfolge der gespeicherten Geheimnummern, d.h. Dienstleistungsarten, akzeptieren.

Nachdem er autorisiert worden ist (die Dienstleistung über das Autorisierungswort abzurufen), darf nur der Karteninhaber über das durch die Karte gewährte Recht verfügen, z.B. von A nach B zu reisen, da nur er selbst die Karte benutzen darf und es ihm weder gestattet ist noch er selbst wünscht, sein geheimes codiertes Befugniszeichen einer dritten Person mitzuteilen, da die dritte Person die Karte mißbrauchen könnte.

Die Bauteile der bekannten Karte führen daher in diesem Zusammenhang folgende Operationen aus:

- Sie führen Berechnungen im Dialog mit einem entfernten unabhängigen Rechner aus, die ein Teil einer völlig unabhängigen rechnergesteuerten Rechenoperation sind,
- sie vergleichen Daten in einer Kooperation mit dem unabhängigen Rechner und
- sie speichern durch einen unabhängigen Rechner eingegebene Daten.

Zusammengefaßt ist hierfür ein Datenleser erforderlich, der Betrieb erfolgt on-line, zwischen Karte und autorisierendem Unternehmen ist ein Dialog erforderlich, um dem autorisierenden Unternehmen einen bestimmten Speicherbereich zugänglich zu machen, parallel ist ein Telefongespräch zwischen Karteninhaber und einer Bedienungsperson aufseiten des autorisierenden Unternehmens in bestimmten Fällen erforderlich und das vorherbestimmte und daher nicht durch den Karteninhaber wählbare Zugriffszeichen wird allein durch eine unabhängige dritte Partei (das autorisierende Unternehmen) gewährt.

Aus der US-PS 47 05 211 ist eine Vorrichtung (Hülle) mit einer Tastatur, einer Anzeige, einer Verarbeitungseinrichtung für durch die Tastatur vorgegebene Operationen und einer Batterie und eine Karte mit eigener Tastatur, Anzeige und Verarbeitungseinrichtung zur Behandlung der über die eigene Tastatur eingegebenen Daten bekannt. Diese Karte ist jedoch unabhängig von der Vorrichtung (Hülle) und führt praktisch die gleichen Operationen wie die Vorrichtung aus. Mithin ist die Vorrichtung im wesentlichen nur ein "Operationsleistungsverstärker" für die Karte. Die Karte zeigt ihre eigenen Daten selbst dann an, wenn sie in die Vorrichtung eingeführt worden ist. Dies ergibt sich aus dem Fenster für die Karten-Anzeige in der Vorrichtung.

Von daher wird mithin nicht die Anregung vermittelt, eine Hülle, wie bei einer der nachstehend angegebenen erfindungsgemäßen Lösungen, als Träger für Eingabe- und Anzeigemittel sowie eine Stromversorgungsquelle zu verwenden und die Verarbeitungs-und Speichermittel auf der Karte vorzusehen, um die Karte von einer Tastatur, Anzeige und der Stromversorgungsquelle freizuhalten, weil bei der bekannten Lösung die Karte mit Tastatur, Anzeige, Verarbeitungsmittel und Batterie und die Vorrichtung (Hülle) mit Tastatur, Anzeige, Verarbeitungsmittel und Batterie sich gegenseitig bedingen.

Die US-PS 45 23 297 zeigt einen Prozessor-Chip auf einer Hülle und auf einer Karte.

Aus der US-PS 44 54 414 ist ein elektronisches Überweisungssystem bekannt, bei dem jeder Modul Überweisungsdaten enthält, die einen Kontostand und ein Kreditlimit darstellen, das durch das autorisierende Unternehmen vorgegeben wird, wobei jedes Mitglied einen von mehreren Modulen erhält, der zuvor durch das autorisierende Unternehmen, z.B. eine Bank, initialisiert und mit einem Kontostand versehen wird. Bei dieser Autorisation ist gleichzeitig eine Personalisierung des Moduls erforderlich, um das Konto zu schützen. Dem Karteninhaber muß eine persönliche Identifierzungsnummer (PIN) durch das autorisierende Unternehmen zugeordnet werden.

Verschiedene Speicher ("Spuren") sind mittels Schalter zugänglich. Eine zweite Art von Modulen kann bestimmten Spuren zur Bildung von Untergruppen, z.B. Eltern und Kindern, zugeordnet werden.

Da jeder Modul durch das autorisierende Unternehmen initialisiert und personalisiert werden muß, ist es nicht möglich, zu jeder gewünschten Zeit und an jedem gewünschten Ort "Unterkarten" auszustellen. Dies ist nur nach einer vorherbestimmten Maßnahme möglich. Nur wenn die Unterkarte auf kleine Transaktionsbeträge begrenzt ist, ist kein codiertes Berechtigungszeichen (PIN) erforderlich.

In jedem Fall ist es unvermeidlich, sich von dem autorisierenden Unternehmen einen Vorrat grundsätzlich autorisierter (Unter-)Karten zu besorgen, bevor deren Übertragung an Mitglieder einer Untergruppe möglich ist, und diese Unter-Karten (die personalisiert sein müssen, sofern sie nicht nur für kleine Transaktionsbeträge verwendet werden sollen) müssen jederzeit und an jedem Ort dem (Haupt-)Karteninhaber zur Verfügung stehen, wenn der Karteninhaber in der Lage sein soll, die Unterkarte einem Mitgleid einer Untergruppe auszustellen.

Aus der US-PS 42 04 113 ist eine Karte bekannt, bei der Krediteinheiten in einem Speicherabschnitt einem ursprünglichen Karteninhaber zugeordnet sind. Die Speicherabschnitte werden durch einen äußeren Automaten aktiviert. Das Gültigmachen eines Speicherabschnitts (eines Krediteinheitsabschnitts) bestimmt den Anfangszeitpunkt der Gültigkeitsdauer. Der Betrag der Einheiten pro Abschnitt wird durch ein autorisierendes System vorherbestimmt. Um Zugang zu einem gültiggemachten Speicherabschnitt zu erhalten, ist nur ein Schlüssel vorgesehen. Der Schlüssel ist dem Karteninhaber nicht bekannt und nicht zugänglich. Der Schlüssel kann nicht durch den Karteninhaber geändert werden. Vielmehr sind der Schlüssel und die Wertbereiche des Speichers nur einem Lese/Schreibgerät zugänglich. Die Speicherbereiche sollen ohne Mitwirkung des Karteninhabers für gültig erklärt werden.

Aus der US-PS 41 92 006 ist ein tragbarer Reisekosten-Tabulator bekannt, der es dem Benutzer ermöglicht, Ausgaben auch in ausländischer Währung einzugeben. Der Tabulator rechnet dann den in ausländischer Währung ausgegebenen Betrag in die Landeswährung des Benutzers um. Der Benutzer muß hierfür den Wechselkurs der ausländischen Währung eingeben, bevor er die Ausgaben eintastet. Es kann immer nur ein Wechselkurs auf einmal gespeichert werden. Wenn der Benutzer von einer Währung auf eine andere umschaltung will, muß er den neuen Wechselkurs eintasten, bevor er die nächste Ausgabe einspeichern kann. Die umgerechneten Ausgaben werden nur zur Registrierung in einem Speicher gespeichert. Die Umrechnung erspart dem Benutzer lediglich eine Multiplikation beim Auflisten seiner Reisekosten. Der Tabulator enthält kein Menu aus einer Vielzahl von Wechselkursen, das es dem Benutzer möglich machen würde, einfach einen auszuwählen.

Es handelt sich mithin weder um eine Zahlkarte, noch verringert sie den Arbeitsaufwand eines Auslandsreisenden, da sie keine unmittelbare Zahlung in einer ausländischen Währung ermöglicht. Vielmehr muß auf übliche Weise Bargeld in ausländischer Währung eingetauscht und unmittelbar oder in Form eines Reiseschecks oder dergleichen ausgegeben werden.

Die US-PS 47 34 568 zeigt eine Karte, bei der ein Sicherheitspegel für jeden Speicherbereich einstellbar ist. Die Identifizierungsnummern sind vorher festgelegt und vorher gespeichert. Die vorherige Festlegung der Identifizierungsnummern ist wesentlich, da bei der Identifizierung eine vorbestimmte Reihenfolge von Identifizierungsnummern überprüft werden soll, wobei eine von dritter Seite einzugebende unabhängig vom Karteninhaber ist.

Der US-PS 46 34 845 sind mehrere diskrete Anzeigeelemente zu entnehmen. Bei vorliegender Anordnung kommt man dagegen mit nur einer Universalanzeige aus.

Die US-PS 45 23 087 schlägt eine Autorisation zur Beendigung einer angeforderten Transaktion vor, wobei eine tragbare Verifikationsvorrichtung verwendet wird. In dem einen Ende der tragbaren Verifikationsvorrichtung ist eine Aussparung zur Aufnahme eines Gutscheins ausgebildet. Ein in der Aussparung angeordneter Druckkopf druckt ein codiertes Authentikationszeichen auf den Gutschein.

Mithin ist es üblich, Karten nur an ein und denselben Kartenbesitzer auszugeben und diesem zuzuordnen. Darüber hinaus empfehlen Kartenausgabeorganisationen den Kartenbenutzern, sorgfältigst darauf zu achten, daß die Karte keiner anderen Person ausgehändigt und anderen Personen die Benutzung der Karte nicht gestattet wird. Diese Organisationen machen den Karteninhaber bei dem Anschein einer offensichtlich autorisierten Benutzung der Karte durch dritte Personen haftpflichtig.

Beispielsweise lauten die Anweisungen einer bekannten Kartenausgabeorganisation XY wie folgt: "Bewahren Sie Ihre XY-Karte an einem sicheren Platz auf und gestatten Sie keiner anderen Person die Benutzung ... teilen Sie keiner anderen Person Ihre geheime persönliche Identifizierungsnummer (PIN) mit oder schreiben Sie Ihre Nummer nicht auf Ihre XY-Karte oder machen Sie diese Nummer niemandem zugänglich."

Der Vertrag des XY-Karteninhabers besagt: "Wir werden Ihnen eine geheime PIN zusenden, und Sie verpflichten sich, diese Nummer geheim zu halten, selbst gegenüber Bankangestellten."

Das Prinzip "eine Karte, ein Benutzer" bedeutet eine unbequeme Einschränkung. Beispielsweise wenn man an eine von Reisenden im Ausland benutzte Karte denkt. Der Karteninhaber wird von seiner Familie begleitet; dennoch muß er in jedem Fall alle Transaktionen mit der Karte selbst ausführen, d.h. er kann kein anderes Familienmitglied beauftragen, mit der Karte einzukaufen.

Neben Reisen gibt es zahlreiche andere Beispiele, in denen ein Karteninhaber daran gehindert ist, persönlich zu erscheinen, um seine Karte zu benutzen. Häufig würde er gern eine andere Person an seiner Stelle mit der Transaktion oder der Entgegennahme einer Dienstleistung beauftragen. Den Karteninhabern ist es jedoch nicht gestattet, Dritten ihre Karte auszuhändigen und ihre PIN mitzuteilen. In den meisten Fällen wünschen sie dies auch nicht, so daß sich Kartenausgabeorganisation und Karteninhaber hierin einig sind. Wenn nämlich dritten Personen die Benutzung der Karte und damit die Kenntnisnahme der PIN des wahren Karteninhabers gestattet wäre, könnten sie über den gesamten, der Karte zugeordneten Wert verfügen.

Daher haben Kartenausgabeorganisationen diese Unbequemlichkeit bereits dadurch zu vermeiden versucht, daß sie mitunter zusätzliche Karten für die Familie des Karteninhabers ("Partnerkarten") oder für Mitarbeiter im Geschäftsbetrieb des Karteninhabers anbieten, und zwar häufig zu geringeren Kosten.

Die Kartenausgabeorganisation könnte eine Karte auf mehr als eine Person ausstellen und mit mehr als einer PIN personalisieren, und zwar jede für eine andere Person. Dies würde jedoch eine Vorherbestimmung des Benutzungsdatums (der Geldmenge, Dienstleistungen, Gültigkeitszeit oder einer anderen Autorisation) für jede autorisierte Person erfordern. Ein derartiges Verfahren würde lediglich den Bedürfnissen eines kleinen Prozentsatzes potentieller Karteninhaber oder denkbarer Anwendungsfälle engegenkommen. Dies würde auch erheblichen bürokratischen Aufwand im Austausch zwischen Kartenausgabeorganisation und zukünftigem Karteninhaber bedeuten, um die individuellen Karten-(benutzungs)-Daten für die Personalisierung dieser Karten sowie die relevanten Verpflichtungen in gesetzlich einwandfreier Weise abzustimmen und zu vereinbaren.

Alles in allem wären derart vorprogrammierte Karten für mehrere Benutzer ein unflexibles Mittel, weil sich die Wünsche und Erfordernisse der Benutzer von Tag zu Tag ändern können und nicht vorhersehbar sind.

Die erfindungsgemäße Mehrbenutzer-Karte (M-Karte) ist nicht mit einer Mehrzweck- oder Mehrdienstleistungs-Karte zu verwechseln, d.h. einer Karte, die von verschiedenen "Herausgebern" ausgegeben oder getragen wird, d.h. von verschiedenen Geschäftsbetrieben, z.B. einer oder mehreren Banken, einer Eisenbahngesellschaft, einer Kraftstoffgesellschaft und einem Parkplatzvermietungsbetrieb. Karten dieser Art sind beispielsweise in der US-PS 44 43 027 angegeben. Ferner sei auf die US-PS 46 56 342 verwiesen. Auch diese Karten werden nur auf einen Karteninhaber ausgestellt.

In der US-PS 42 77 837 wird eine tragbare Datenendstation zur Aufnahme zweier Karten für die Durchführung von Transaktionen zwischen den Karten angegeben. In der internationalen Patentanmeldung W083/03018 wird vorgeschlagen, in einer Karte mehrere Identifizierungszeichen zu verwenden, die frei gewählt werden können.

Die Einschränkung, daß eine Karte nur für einen Karteninhaber ausgestellt wird, ist nicht der einzige Nachteil bekannter Kartensysteme. Ein weiterer Nachteil ist in der mangelnden Flexibilität der Werte gespeicherter Geldeinheiten oder anderer Kredite zu sehen.

In den Speichern der Karte ist eine Information enthalten, die dem Karteninhaber die Erlangung bestimmter Werte gestattet, d.h. den Erwerb einer Ware, einer Dienstleistung, z.B. das Parken eines Kraftfahrzeugs, oder eines Transports von A nach B. Eine derartige Kreditinformation wird gewöhnlich in "Einheiten" ausgedrückt. Diese Einheiten können verschiedene Werte darstellen, selbst in derselben Karte. Bei einem Mehrzweck- oder Mehrgesellschafts-Kartensystem kann eine Karte verschiedene Arten von Einheiten für verschiedene Arten von Geschäftsbetrieben, z.B. einer Bank, einer Eisenbahngesellschaft, eine Kraftstoffvertriebsgesellschaft oder Parkplatzvermietungsgesellschaft, enthalten. Beispielsweise handelt es sich bei den "Einheiten" im Bankgewerbe um Geldeinheiten (eine Einheit = ein US-Dollar oder eine D-Mark) oder bei den "Einheiten" einer Eisenbahngesellschaft um eine Anzahl von Fahrten zwischen zwei vorbestimmten Orten im täglichen Pendelverkehr. Die "Einheiten" einer Kraftstoffvertriebsgesellschaft sind wiederum Geldeinheiten, und die "Einheiten" bei einer Parkplatzvermietung können einer Tages-Parkgebühr entsprechen.

Allen derzeitigen Karten ist gemeinsam, daß diese Einheiten ihren individuellen Wert vom Zeitpunkt der Kartenausgabe oder erneuten Ausgabe bis zum Zeitpunkt des Aufbrauchs der letzten Einheit nicht ändern. Mit anderen Worten: Eine als ein US-Dollar oder als die Gebühr für eine Fahrt von A nach B "initialisierte" Einheit behält stets den Wert von einem US-Dollar oder des Gegenwertes einer solchen Fahrt.

Derzeit bekannte Karten sind daher a) Einzelbenutzer-Karten (sofern sie durch den Herausgeber ursprünglich nicht mehr als einem Benutzer zugeordnet wurden, was bisher praktisch nicht geschieht) und enthalten b) "Einheiten", deren Wert nach dem Laden des Speichers nicht mehr veränderbar ist.

Zusammenfassend läßt sich daher feststellen, daß die relevanten Zuordnungen, z.B. a) die Zuordnung einer Karte zu einem Benutzer (Karteninhaber), b) die Zuordnung einer Bedeutung (Bezeichnung) zu einer Krediteinheit und c) die Zuordnung eines Wertes zu einer Einheit, A) durch den oder die Herausgeber bestimmt und B) vor der Herausgabe oder erneuten Herausgabe der Karte bewirkt werden.

Das Ziel der Erfindung ist es, eine Schaltungsanordnung der geschilderten Art anzugeben, bei der eine an einen einzigen Karteninhaber (Benutzer) ausgegebene Karte ein jederzeit durch den Karteninhaber nach der Ausgabe oder erneuten Ausgabe derart steuerbares Mittel aufweist, daß Rechte an Dritte übertragen werden, daß diese Rechte geändert oder gelöscht werden und daß den in der Karte gespeicherten Daten zusätzliche Bezeichnungen und Werte zugeordnet werden. Der Karteninhaber und Unterbenutzer sollte ebenfalls berechtigt sein, die derartigen Daten ursprünglich durch den oder die Herausgeber zugeordneten Bezeichnungen und Werte zu ändern, und zwar innerhalb des Umfangs der ursprünglichen Rechte, Gültigkeitsdauer und Bedingungen des Herausgebers oder der Herausgeber. Etwas verallgemeinerter ausgedrückt, sollte die erfindungsgemäße Schaltungsanordnung mit Karten oder anderen Modulen ein Mittel zur nachträglichen - nach der Ausgabe oder erneuten Ausgabe - Änderung von Daten, die in Speichern innerhalb der Karte gespeichert sind, aufweisen, indem codierte Zeichen, Werte und Bezeichnungen den in den erwähnten Speichern in der Karte gespeicherten Daten zugeordnet werden.

Der Erfindung liegt die Aufgabe zugrunde, eine Schaltungsanordnung der gattungsgemäßen Art anzugeben, die es dem Karteninhaber ermöglicht, Dritten die Benutzung der Karte zu gestatten und die in der Karte gespeicherten Daten zu ändern.

Erfindungsgemäß ist die Anordnung in der Weise ausgebildet, daß das programmierbare Speichermittel ein Unterbenutzer-Speichermittel aufweist, in dem wenigstens ein persönliches Unterbenutzer-Berechtigungsmerkmal speicherbar ist, daß ein Programmiermittel zum Programmieren des programmierbaren Unterbenutzer-Speichermittels mit wenigstens einem nur durch den berechtigten Karteninhaber wählbaren persönlichen Unterbenutzer-Berechtigungsmerkmal vorgesehen ist, daß das Programmiermittel durch das Authentikations-Prüfmittel bei Authentikation des persönlichen Karteninhaber-Berechtigungsmerkmals freigebbar ist und daß das Authentikations-Prüfmittel auch die Authentikation eines persönlichen Berechtigungsmerkmals als einem persönlichen Unterbenutzer-Berechtigungsmerkmal entsprechend bewirkt, das in dem Unterbenutzer-Speichermittel gespeichert ist.

Weitere Merkmale der Erfindung sind aus den abhängigen Ansprüchen ersichtlich.

Die erfindungsgemäße Anordnung kann insbesondere ein Speichermittel zum Speichern wenigstens einer Originaleinheit mit einer ersten Wertbezeichnung und einer Wertbezeichnungs-Tabelle zum Zuordnen eines gewählten Umrechnungsfaktors zur Originaleinheit zwecks Bildung von umbewerteten Einheiten mit einer zweiten Wertbezeichnung aufweisen.

Weiter kann die erfindungsgemäße Anordnung eine Karte mit einem Mikroprozessor enthalten, der ein programmierbares Speichermittel zur Aufnahme von Daten aufweist, die zur Durchführung einer Transaktion mittels der Karte verwendbar sind, und mit einem Programmiermittel zum Ändern von Daten in dem programmierbaren Speichermittel, wobei die Karte ein Kommunikationsmittel aufweist, das betriebsmäßig mit dem Programmiermittel zur Kommunikation mit dem Äußeren der Karte verbunden ist; und eine Karten-Hülle zur Aufnahme der Karte, wobei die Karten-Hülle wenigstens aufweist: eine Stromversorgungsquelle, ein Anzeigemittel, ein Eingabemittel und ein Kommunikationsmittel, die betriebsmäßig mit der Stromversorgungsquelle, dem Eingabemittel und dem Anzeigemittel verbunden und mit dem Kommunikationsmittel der Karte in einer vorbestimmten relativen Lage von Karte und Hülle verbindbar sind, um Daten über das Eingabemittel und das angeschlossene Kommunikationsmittel in das Programmiermittel zum Einspeichern in das programmierbare Speichermittel einzugeben, und zum Anzeigen von Daten aus dem programmierbaren Speichermittel über das Kommunikationsmittel durch das Anzeigemittel.

Im einzelnen ist es dem Karteninhaber mittels der steuerbaren Mittel möglich, einem Dritten (Unterbenutzer) jederzeit, an jedem Ort und in jedem Ausmaß der Benutzung der Karte, Rechte im Rahmen des Umfangs oder der Rechte, Gültigkeit und Bedingungen, zu denen die Karte durch den oder die Herausgeber ursprünglich an den Karteninhaber erstmals oder erneut ausgegeben wurde, zu übertragen. Die Karte kann durch den Karteninhaber an eine vorherbestimmbare Anzahl von Unterbenutzern übertragen werden. Das Ausmaß der Rechte, Gültigkeitsdauer und Bedingungen der Unterbenutzung durch einen einzelnen Unterbenutzer kann sich beziehen auf: a) deren Anwendung oder Herausgeber, z.B. für Bankgeschäfte, bei denen es sich um monetäre Anwendungen handelt, oder für Eisenbahnfahrten, bei denen es sich um eine Dienstleistung handelt, b) auf die Dauer, innerhalb der die Übertragung gültig sein soll, und c) auf den Wert, z.B. in Geldeinheiten, Dienstleistungseinheiten, Anzahl von Benutzungen oder irgendeine andere Art einer digital bestimmbaren Kreditierung oder Autorisation, und auf andere Eigenschaften der Karte.

Diese Mittel ermöglichen dem Karteninhaber, nach der Ausgabe oder erneuten Ausgabe der Karte, einer Einheit verschiedene Werte zuzuordnen, die Bezeichnung von Einheiten zu ändern und einer Einheit zusätzliche Bezeichnungen zuzuordnen, und zwar innerhalb des Umfang der ursprünglichen Fristen und Kreditsummen, die anfänglich oder bei der erneuten Herausgabe durch den oder die Herausgeber festgelegt wurden.

Die Karte ist mit den bestehenden Systemen kompatibel. Das Datenein- und -ausgabeverfahren bei der Mehrbenutzer-Karte kann dem bei bekannten Verfahren genormten Verfahren angepaßt sein.

Die Übertragung bestimmter Benutzungsrechte an Unterbenutzer erfolgt allein durch den Karteninhaber. Das heißt, er braucht keine Unterstützung durch das System. Das System kann jedoch so ausgebildet sein, daß es den Karteninhaber jederzeit nach der ersten oder erneuten Ausgabe der Karte auf Wunsch des Karteninhabers bei der Programmierung in Übereinstimmung mit seinen dann bestehenden Wünschen unterstützt.

Durch die Erfindung wird ferner ein Tastenmittel zum Eingeben von Daten in die Karte, ein Anzeigemittel zum Prüfen der vorliegenden Bedingungen und Kontostände bzw. Saldos verfügbarer Werte, Einheiten und Zeiten und zur Vorgabe und Prüfung der Übertragung oder Änderungsdaten und eine interne Stromversorgungsquelle geschaffen. Die Karte enthält ferner Speichermittel und logische Steuermittel zur Verarbeitung von Daten, wenn a) die Karte an einen Unterbenutzer übertragen wird, b) Werte geändert oder neu bezeichnet werden und c) die Karte durch einen Unterbenutzer mit den ursprünglichen Einheitswerten und Bezeichnungen oder durch den Karteninhaber oder einen Unterbenutzer mit geänderten Einheitswerten und Bezeichnungen benutzt wird.

Alternativ wird eine Karte ohne Tastatur, Anzeige und Stromversorgungsquelle, jedoch in Kombination mit einer Hilfsvorrichtung ("Hülle") geschaffen, die mit der Karte verbunden werden kann, wobei die Hilfsvorrichtung wenigstens die Tastatur, Anzeige, Logik und Speichermittel sowie eine Stromquelle aufweist. Äußerlich unterscheidet sich die Karte dann nicht von den herkömmlichen Karten.

Die Hilfsvorrichtung kann tragbar oder stationär sein. Die Verbindung zwischen der Karte und der Hilfsvorrichtung kann galvanisch oder auf andere Weise, z.B. optisch, induktiv, kapazitiv oder durch Mikrowellen, hergestellt sein. Die Hilfsvorrichtung enthält die Mittel zur Übertragung der Karte an Unterbenutzer und zur Zuordnung und Änderung von Werten und Bezeichnungen. Die Hilfsvorrichtung kann zur Übertragung der Karte an Unterbenutzer und auch zur Zuordnung und Änderung von Werten und Bezeichnungen ausgebildet sein. Diese Karte wird nachstehend als "M-Karte" bezeichnet, während die Hilfsvorrichtung als "M-Karten-Hülle" oder einfach als "Hülle" bezeichnet wird.

Es ist festgestellt worden, daß im Geschäfts- und Bankwesen ein starkes Interesse an einer durch einen Karteninhaber steuerbaren Mehrbenutzer-Karte, wie der erfindungsgemäßen, besteht. Diese Karte kommt den Bedürfnissen und Wünschen der Karteninhaber, Kartenausgabeorganisationen und Kartenannahme-Geschäftsbetrieben stark entgegen. Die Karteninhaber brauchen nicht mehr jede einzelne Transaktion selbst durchzuführen, sondern können Dritte als Unterbenutzer zur Durchführung einer oder mehrerer spezieller Transaktionen oder zur Entgegennahme bestimmter Dienstleistungen innerhalb der durch den Karteninhaber festgelegten Fristen und Bedingungen bestimmen, ohne ihre PIN (persönliche Identifizierungsnummer) zu offenbaren und ohne dadurch den Unterbenutzern den gesamten Kredit der Karte zur Verfügung zu stellen. Zur Übertragung an einen Unterbenutzer muß eine neue PIN für diesen Unterbenutzer eingegeben werden. Die erfindungsgemäße M-Karte kann daher außerdem dazu beitragen, die Sicherheit gegen einen Verlust oder Diebstahl zu erhöhen. Wenn der Karteninhaber befürchtet, daß die PIN bei einer Transaktion durch einen Dritten herausgefunden oder ausspioniert werden könnte, kann er die M-Karte für einen Dieb oder unehrlichen Finder unbrauchbar machen: Der Karteninhaber programmiert die M-Karte einfach so um, daß er selbst zum Unterbenutzer wird, d.h. er ordnet sich (neben seinem Haupt-PIN) eine neue PIN zu und begrenzt den unter der neuen PIN verfügbaren Wert auf etwa oder genau den Betrag der erwarteten Transaktion und stellt eine Zeitspanne (Frist) ein, innerhalb der die Transaktion möglich sein soll. Er kann dies kurzfristig vor einer Transaktion durchführen. Wenn er dann die Karte verliert, ist der vorprogrammierte Kredit entweder aufgebraucht oder die Frist abgelaufen.

Ein weiterer Vorteil besteht in der Möglichkeit, Werte und Bezeichnungen zu ändern. Dies steigert die Flexibilität der M-Karte in unvorhersehbarer Weise hinsichtlich aller möglichen Aspekte. Zum bessseren Verständnis sind nachstehend Beispiele einiger neuer Anwendungsmöglichkeiten angegeben.

Obwohl es verstellbar ist, daß sich herkömmliche Karten durch den Herausgeber für verschiedene Landeswährungen initialisieren lassen, ist dies dennoch nicht sehr hilfreich, weil meistens niemand vorhersehen kann, was er nach einiger Zeit, z.B. einem Jahr, benötigt. Die Brauchbarkeit und Bequemlichkeit würden erheblich gesteigert, wenn ohne erneute Initialisierung (erneute Herausgabe) der Karte entweder eine Bank oder der Karteninhaber oder selbst ein Unterbenutzer jederzeit Währungen in der M-Karte in einem Ausmaß ändern könnte, das entweder durch die ursprünglich initialisierten Fristen und Bedingungen und Werte oder durch die relevanten Unterbenutzer-Daten vorgegeben ist. In einem anderen Anwendungsfall, in dem ein Geschäftsbetrieb ("Firma") der Karteninhaber ist, kann die M-Karte eine "Firmenkarte" sein, z.B. in Form einer Kreditkarte. Solche Firmenkarten können durch die Firma an Arbeitnehmer ausgestellt werden, die auf Kosten der Firma reisen. Die Firma kann die M-Karte an einen Arbeitnehmer als Unterbenutzer übertragen und den voraussichtlichen Kreditbetrag in einer oder mehreren Währungen mit zeitlicher Begrenzung einstellen. Bei der Benutzung der M-Karte kann der Arbeitnehmer außerdem die Art der Ausgabe (Kosten) in die Karte eingeben, so daß die M-Karte automatisch Aufzeichnungen der Transaktionen speichert. Bei Auslandsreisen kann er sogar Valuta der einen Währung in eine andere umtauschen, wenn er Geld in einem anderen Land benötigt. Das Verfahren des Umtauschens von Valuta bei sich ändernden Wechselkursen wird nachstehend noch beschrieben. Nach der Rückkehr gibt der Arbeitnehmer die M-Karte wieder an das ausstellende Firmenbüro zurück. Dieses führt die M-Karte dann in einen Leser ein, in dem die Transaktionen aus dem Transaktionsspeicher ausgelesen werden. Die Transaktionen stellen das Ausgabenkonto des reisenden Arbeitnehmers dar und werden in das Computer-Buchungssystem eingegeben, wo sie weiterverarbeitet werden. Danach wird das Transaktionskonto im Speicher der M-Karte auf Null zurückgestellt, der Unterbenutzer-PIN- (M-PIN-)Speicher wird gelöscht, und die M-Karte kann zur Ausgabe an einen anderen Reisenden programmiert werden.

Es ist ohne weiteres ersichtlich, daß eine derartige Anwendung zahlreiche Vorteile hat: Die Firma kann ihre Liquidität gering halten, da sie dem reisenden Arbeitnehmer kein Bargeld (oder entsprechende Reiseschecks) zu geben braucht, und sie spart Karten-Kosten, da sie nicht für alle oder die meisten reisenden Arbeitnehmer einzelne Karten beschaffen muß. Ferner braucht der Arbeitnehmer keine Reisekostenabrechnungen zu schreiben. Die Buchhaltung von Reisekosten ist automatisiert. Das Verfahren verhindert sogar ein "Aufbauschen" oder Fälschen von Reisekostenabrechnungen oder anderer Kostenabrechnungen, da der Transaktionsspeicher der M-Karte den wahren Wert jeder Transaktion reflektiert, sofern nicht ein Verkäufer unredlich mit dem Arbeitnehmer zusammenarbeitet.

Ein weiterer Anwendungsfall wird evident, wenn eine M-Karte von einer reisenden Familie verwendet wird. In diesem Fall kann der Karteninhaber die M-Karte auf verschiedene Weise übertragen, z.B. auf bestimmte Mitglieder der Familie für die gesamte Reisedauer oder auf andere nur von einer voraussichtlichen Transaktion zur nächsten oder für einen Tag oder eine Anzahl von Tagen. Der Karteninhaber kann die gesamte Berechtigung auf seinen Ehepartner und begrenzte Beträge auf die Kinder programmieren. Außerdem kann die M-Karte in der erwähnten Weise als Zahlungsmittel in ausländischer Währung verwendet werden.

Für den Umtausch von Valuta von einer Währung in eine andere, was eine Änderung des Wertes der Einheit und eine Änderung der Bezeichnung der Einheiten bedeutet, d.h. um einen bestimmten Betrag einer Währung A in eine Währung B umzutauschen, wenn sich der Wechselkurs ändert, bewirkt eine Vorrichtung oder ein Automat die Berechnung und Autorisierung dieses "Umtausches", um die M-Karte für Transaktionen in der "neuen" Währung verwendbar zu machen. Derartige Vorrichtungen oder Automaten werden durch international tätige Kartenausgabeorganisationen an Plätzen aufgestellt, die hauptsächlich von Reisenden aufgesucht werden, z.b. Flughäfen, Bahnhöfen, Hotels usw. Die Automaten arbeiten on-line mit einem Hostcomputer zusammen, der die Notierungen sich ändernder Wechselkurse ständig oder von Zeit zu Zeit auf den neuesten Stand bringt (aktualisiert).

In einem weiteren Anwendungsfall, in dem ein Staat ausländische Besucher mit speziellen Waren und Dienstleistungen an bestimmten Orten versorgt, z.B. in Hotels, bieten M-Karten Vorteile gegenüber einem System, bei dem der Besucher spezielle Besuchergutscheine (ViVos = visitor vouchers) gegen seine ausländische Valuta erhält oder der Staat die Bezahlung an diesen speziellen Orten durch ausländische Valuta verlangt. Keine Alternative wäre ausreichend, wenn es für einen Inländer gesetzlich verboten ist, Besucher-Gutscheine oder ausländische Währung zu besitzen, insbesondere wenn ausländische Besucher für Waren und Dienstleistungen mit Besucher-Gutscheinen oder fremder bzw. ausländischer Währung an solchen Stellen bezahlen, die auch inländische Währung annehmen.

Bei einem erfindungsgemäßen System, das dem ausländischen Besucher gestattet oder von ihm verlangt, seine ausländische Valuta gegen eine "Besucher-Gutscheinkarte" einzutauschen, können durch die Konsulate des Staates oder durch M-Karten-Ausgabeautomaten an dessen Grenzübergang M-Karten ausgestellt werden, in die der Name des Besuchers, die von ihm gewählte PIN und der Geldbetrag, den er umtauschen möchte, eingegeben werden. Derartige Automaten können auch einen Banknotenannahmemodul bekannter Art für Valuta oder einen Kartenakzeptor für Kredit- oder Debetkarten des Heimatlandes des Besuchers aufweisen. Der Automat kann selbst die Visa- und Gesundheitsbescheinigungen des Besuchers oder der Besucher in dessen bzw. deren M-Karte speichern. Bei Reisen innerhalb des Landes kann der Besucher die Karte an seine mitreisenden Familienmitglieder entsprechend ihren Wünschen übertragen.

Die Vielseitigkeit der M-Karten läßt sich an einem weiteren Beispiel im Rahmen der erwähnten Anwendung der M-Karte als Besucher-Gutscheinkarte veranschaulichen. So möge der Besucher Waren oder Dienstleistungen erwerben wollen, die an bestimmten Plätzen gleichermaßen für Inländer und ausländische Besucher angeboten werden, z.B. Kleidungsstücke in Warenhäusern oder Flugscheine oder Bahnfahrkarten. Da der Besucher, wenn er in das Land einreist und sein Geld umtauschen will, nicht vorherbestimmen oder vorhersehen kann, in welchem Verhältnis spezielle Waren und Dienstleistungen einerseits für ausländische Besucher zur Bezahlung mittels Besucher-Gutscheinen oder dergleichen reserviert und andererseits andere Waren und Dienstleistungen sowohl durch inländische Kunden als auch durch ausländische Besucher durch Bezahlung mit inländischem Geld erwerbbar sind, gibt er - bei der Transaktion - in die M-Karte in inländischer Währung den Geldbetrag ein, den er bezahlen muß und der dann innerhalb der M-Karte in inländische Währung "umgetauscht" wird. Der inländische Verkäufer erhält daher inländische Währung gleichermaßen von inländischen und ausländischen Kunden. In Fällen wie diesem braucht keine Vorrichtung oder kein Automat die umgetauschte Kartenwährung zu berechnen und für gültig zu erklären, da die staatlichen Behörden einen festen Wechselkurs zwischen Besucher-Gutscheinen und Inlandswährung einzusetzen pflegen, d.h., daß es wenigstens während der Gültigkeitsdauer der M-Karte keine Wechselkursschwankung gibt.

Ferner können an Orten, wie Hotels, Flughäfen und Bahnstationen, wo sich viele Besucher einfinden, Bargeldausgabeautomaten für Inlandswährung aufgestellt werden, die M-Karten mit einem bereits umgetauschten Kredit in Inlandswährung akzeptieren, um den Besucher mit inländischen Banknoten zu versehen.

Die Erfindung und Weiterbildungen der Erfindung werden nachstehend anhand von Zeichnungen bevorzugter Ausführungsbeispiele, wobei die Zeichnungen einen Teil der Beschreibung bilden, ausführlicher beschrieben. Es zeigen:

- Fig. 1 eine Draufsicht auf eine autonome M-Karte, die in der erfindungsgemäßen Anordnung verwendet wird,
- Fig. 2 ein Blockschaltbild von Bauteilen der in Fig. 1 dargestellten M-Karte,
- Fig. 3 eine Draufsicht auf eine in Kombination mit einer Hülle verwendete M-Karte,
- Fig. 4 eine perspektivische Ansicht einer in Kombination mit der erfindungsgemäßen M-Karte verwendbaren Hülle,
- Fig. 4a eine perspektivische Ansicht eines weiteren Ausführungsbeispiels der Hülle mit M-Karte,
- Fig. 5 eine Ansicht der Hülle mit der M-Karte in einer Lage, in der sie nicht miteinander in Kontakt stehen,
- Fig. 6 eine Ansicht der Hülle mit teilweise ausgezogener M-Karte in einer Lage, in der sie mit den Hüllenkontakten in Kontakt steht,
- Fig. 7 eine Ansicht einer teilweise aufgebrochenen Hülle zur Darstellung der Kontaktlage für die Einstellung einer Unterbenutzer-M-PIN und Veränderung von Werten,
- Fig. 8 ein Blockschaltbild der miteinander verbundenen M-Karte und Hülle,
- Fig. 9 ein Flußdiagramm der Mehrbenutzer-Programmierung für Unterbenutzer,
- Fig. 10 ein Flußdiagramm des Verfahrens der Löschung einer Unterbenutzer-Autorisation,
- Fig. 11 ein Flußdiagramm der Programmierung veränderbarer Werte, dargestellt am Beispiel "Währungsumtausch", einschließlich Information bezüglich Kreditstand,
- Fig. 12 ein Flußdiagramm einer Programmierung veränderbarer Werte nach Fig. 11 ohne Information bezüglich Kreditstand,
- Fig. 13 ein Flußdiagramm des Terminal-Freigabe-Verfahrens nach den Fig. 11 und 12,
- Fig. 14 ein Flußdiagramm des Rücktausch-Verfahrens,
- Fig. 15 eine perspektivische Ansicht des Besucher-Gutscheinkarten-Ausgabeautomaten mit Blick auf das Bedienungsfeld der Bedienungsperson,
- Fig. 16 eine Ansicht des Automaten nach Fig. 15 mit Blick auf das Bedienungsfeld des Besuchers,
- Fig. 17 ein Blockschaltbild des Besucher-Gutscheinkarten-Ausgabeautomaten,
- Fig. 18 ein Flußdiagramm des Besucher-Gutscheinkarten-Ausgabeverfahrens bei dem Automaten nach Fig. 17,
- Fig. 19 eine perspektivische Ansicht eines Besucher-Gutscheinkarten-Rückgabeautomaten,
- Fig. 20 ein Blockschaltbild einer Besucher-Gutscheinkarten-Rückgabeautomaten und
- Fig. 21 ein Flußdiagramm des Besucher-Gutscheinkarten-Rückgabeverfahrens bei den Automaten nach den Fig. 19 und 20.

Die Ziele der Erfindung werden im wesentlichen durch eine tragbare Vorrichtung erreicht, die mit anderen Vorrichtungen zusammenarbeiten kann. Die tragbare Vorrichtung wird nachstehend als "M-Karte" bezeichnet. Die M-Karte ist mit Karten in externen Systemen kompatibel, die allgemein akzeptierten Normen entsprechen.

Die M-Karte enthält eine Tastatur zum Eingeben von Befehlen und Identifizierungsdaten sowie numerischen Werten, einschließlich Transaktionsdaten, ohne Beschränkung auf solche Transaktionsdaten. Die Vorrichtungen enthalten ferner Speichermittel zum permanenten und kurzzeitigen Speichern von Daten sowie Logikmittel zur Durchführung logischer Verfahren (Verknüpfungen) und Rechnungen mit in den Speichermitteln gespeicherten und über die Tastatur eingegebenen Daten. Ferner sind Anzeigemittel zur selektiven Anzeige von Daten, einschließlich (jedoch ohne Beschränkung darauf) Befehlen und Transaktionen an die Karte und den Modul in tragbarer Ausführung, vorgesehen. Die Vorrichtungen enthalten ferner eine Stromversorgungsquelle, z.B. eine Batterie.

Die M-Karte kann alle erwähnten Mittel enthalten. In einer anderen Ausführung sind die erwähnten Mittel auf die Karte und eine "Hülle", nachstehend auch als "M-Karten-Hülle" bezeichnet, aufgeteilt.

In einer solchen Ausführungsform enthält die M-Karte Logik- und Speichermittel, während die M-Karten-Hülle auch Logik- und Speichermittel enthalten kann, wenigstens jedoch Anzeigemittel, eine Tastatur und eine interne Stromversorgungsquelle enthält.

In tragbarer Ausführung hat die M-Karten-Hülle im wesentlichen die Form einer Karte, wobei ihre äußeren Abmessungen um einen geringen Prozentsatz größer sind, so daß sie die M-Karte durch eine Öffnung in ihrer kürzeren Seiten aufnehmen kann.

Diese Ausführung in Form einer Kombination aus M-Karte und M-Karten-Hülle hat den Vorteil, daß die M-Karte wie eine herkömmliche Karte aussieht und keine Anzeige und keine Tastatur sowie keine Stromversorgungsquelle aufweist.

Da die Funktion der M-Karte, wenn sie auch die Anzeige und die Tastatur und die Stromversorgungsquelle aufweist, analog, d.h. im wesentlichen gleich der Funktion einer Kombination aus M-Karte und M-Karten-Hülle, ist, wird nur letztere ausführlicher beschrieben.

Die vorliegende M-Karten-Hülle befindet sich normalerweise, obwohl nicht notwendigerweise, im Besitz des Inhabers einer M-Karte. Die M-Karte und die M-Karten-Hülle sind jedoch nicht logisch miteinander verbunden. So könnte ein M-Karten-Inhaber eine andere "fremde" M-karten-Hülle zur Programmierung seiner M-Karte verwenden.

Bei Benutzung der M-Karte für Transaktionen in einem externen System wird sie wie irgendeine genormte "intelligente" Karte oder Chip-Karte benutzt, d.h. zur Benutzung der M-Karte für Transaktionen ist die M-Karten-Hülle nicht erforderlich.

Zur Programmierung der M-Karte wird sie in die M-Karten-Hülle eingeführt. Die M-Karten-Hülle kann als Behälter für die M-Karte dienen, wenn sie von ihrem Inhaber mitgeführt wird. Wenn die M-Karten-Hülle als Behälter dient, ist die M-Karte vollständig in die M-Karten-Hülle eingeschoben.

Um die Kombination aus M-Karte und M-Karten-Hülle zur Programmierung der M-Karte zu bilden, müssen beide so ausgebildet sein, daß ein kooperativer Datenaustausch zwischen ihnen möglich ist. Dies kann über galvanische Kontakte oder auf andere Weise, z.B. induktiv, durch Licht, durch Mikrowellen usw. erfolgen. Bei dem beschriebenen Ausführungsbeispiel sind galvanische Kontakte vorgesehen.

In Fig. 1 ist eine M-Karte 101 in selbständiger bzw. autonomer Ausführung dargestellt. Sie hat eine Tastatur 102 mit Zifferntasten "0" bis "9", eine mit "C" beschriftete Löschtaste 110, die zum Löschen der letzten Eingabe dient, eine mit "R" beschriftete Rücksetztaste 109, eine mit "0K" ("in Ordnung") beschriftete Taste 108, eine mit "Info" beschriftete Taste 105, eine mit "DL" beschriftete Dienstleistungstaste 104 und erfindungsgemäße Spezialtasten 106 und 107, die mit "M" (für mehrfach) und "WV" (für "Wertveränderung") beschriftet sind. Ferner hat die M-Karte 101 eine alphanumerische Anzeige 103.

Fig. 2 stellt ein Blockschaltbild dar, in dem Anschlüsse 219 und 220 in Form von Kontakten für eine externe Vorrichtung dargestellt sind. Die Anschlüsse 219 sind mit einer Eingabe/Ausgabe-Einheit 218 verbunden, die einen seriellen Datenaustausch mit einer externen Vorrichtung bewirkt. Die Anschlüsse 220 stellen eine Verbindung zu einer externen Stromversorgungsquelle her. Eine herkömmliche bzw. Standard-Kartenlogik 208 dient hauptsächlich zur Autentikation der Karte, der persönlichen Identifizierungsnummer PIN (Prüfung der Identität des Benutzers und des Karteninhabers) und äußerer Transaktionen. Ein Zwischenspeicher 209 nimmt externe Daten für die Dauer der Prüfung auf, wenn derartige externe Daten, die PIN und andere Identifizierungsdaten in den Speicher eingegeben werden, um sie intern dahingehend zu prüfen, ob sie richtig sind oder nicht. Ein Programmspeicher 217 enthält ein Info-Programm 216, ein Mehrdienstleistungs-Programm 215, ein Externtransaktionen-Programm 214, ein Rechenprogramm 213 und ein PIN-Prüfprogramm 211. Ein Speicher 210 für die PIN des Karteninhabers ist nicht von außen zugänglich, vielmehr ist sein Inhalt nur innerhalb der Karte verfügbar. Ein Zwischenspeicher 212 speichert Daten zur weiteren internen Verarbeitung. Eine M- und WV-Logik 201 ist mit einem Unterbenutzerund WV-Programm-Speicher 202 mit einem Unterbenutzer-PIN-Programmspeicher 206, einem WV-Programmspeicher 205, einem Programmspeicher 204 für interne Transaktionen und einem Anzeige- oder Textprogrammspeicher 230 verbunden.

Ein Unterbenutzer-PIN-Speicher 207 ist nicht von außen zugänglich, vielmehr ist sein Inhalt nur innerhalb der Karte verfügbar. Die Unterbenutzer-PINs können, gesteuert durch die M- und WV-Logik 201, gelöscht werden. Ein Arbeitsspeicher 224 enthält Transaktionskonten 225 für Karteninhaber und Unterbenutzer, Benutzungsfristen 226 für Karteninhaber und Unterbenutzer, ein WV-Transaktionskonto 227 für Karteninhaber und Unterbenutzer und eine Tabelle 228 für verschiedene Dienstleistungen, für die die Karte vorgesehen ist. Der Arbeitsspeicher 224 ist Teil des Standardfunktionspakets der Karte. Ein Arbeitsspeicher 221 enthält eine Umrechnungs-(Änderungs-)Faktorentabelle (Liste) 222 und ein Bezeichnungsmenu 223. Die Speicher 22 und 223 können als Kombinationsregister ausgebildet sein, bei dem wenigstens eine Bezeichnung einem Umrechnungsfaktor zugeordnet oder mit diesem kombiniert ist.

Obwohl als Beispiel eines Karteninhaber- und Unterbenutzer-Befugnismerkmals die PIN angegeben ist, läßt sich auch irgendein anderes (codiertes) Merkmal oder Zeichen verwenden, z. B. ein Stimmenabdruck (der in Form digitalisierter Daten gespeichert und durch den Karteninhaber oder Unterbenutzer eingegeben wird) oder ein Algorithmus, z.B. der erwähnte "Trapdoor-Algorithmus".

Abgesehen von den Anschlüssen oder Steckverbindern 219 und 220 können die vorstehend erwähnten Teile alle zu einer monolitischen Schaltung integriert sein. Die Tastatur 102 besteht aus der numerischen Tastatur 111, den Funktionstasten 104 bis 108 und den erfindungsgemäßen Tasten 106 und 107. Die Anzeige 103 stellt Informationen bezüglich des Benutzers dar und leitet sowohl den Karteninhaber bei der Benutzung der ("M"-)Funktion "Unterbenutzer-Programmierung" als auch den Karteninhaber und Unterbenutzer bei der Benutzung der Funktion "Wertveränderung". Eine Stromversorgungsquelle 229 sorgt für die Stromversorgung der logischen Schaltungen und bei der Programmierung und dem Löschen elektrisch programmierbarer und löschbarer Speicher (EEPROMs) bei der Unterbenutzer-PIN-Programmierung und Speicherung veränderbarer Werte. Ihre Funktion wird später anhand von Fig. 8 ausführlicher beschrieben, deren Funktion und Wirkungsweise jener gleicht.

Fig. 3 stellt eine M-Karte 301 dar, die keine Tastatur oder Anzeige aufweist. Sie hat jedoch einen Block 302 aus einzelnen galvanischen Kontakten 303. Sie hat ferner Streifen 304, deren Farbe vom Untergrund abweicht und die zur Ausrichtung der Karte dienen, wenn sie in die M-Karten-Hülle eingeführt worden ist.

Fig. 4a zeigt ein anderes Ausführungsbeispiel der Erfindung, bei der die Hülle 501 einen Schlitz 502 aufweist, durch den eine programmierbare Karte 510 zur Programmierung eines Magnetstreifens 512 der Karte hindurchgeschoben werden kann. Die Hülle 501 kann eine Anzeige, Eingabetasten und eine Stromversorgungsquelle, ähnlich der Hülle nach Fig. 4, aufweisen. Außerdem hat die Hülle 501 einen Lese/Schreib-Kopf 504 zum Aufzeichnen und Ablesen von Informationen auf bzw. von dem Magnetstreifen 512 sowie einen Löschkopf 506 zum Löschen des Magnetstreifens 512. Erfindungsgemäß bildet der Magnetstreifen 512 den programmierbaren Speicher der Karte, ob es sich nun um eine Mehrbenutzer-Karte, eine wertveränderbare Karte oder eine mit Besuchergutscheinen versehene Karte handelt. Die Karte 510 kann durch manuelles Hindurchschieben der Karte durch den Schlitz 502 programmiert werden.

Die Fig. 4, 5, 6 und 7 zeigen eine M-Karten-Hülle 401 mit der Tastatur 102, der Anzeige 103, einem Fenster 403 zur Sichtbarmachung der Ausrichtungsstreifen 304, wenn sich Hülle und M-Karte in der Kontaktposition befinden, und einer Aussparung 402 zum Erfassen der Karte, wenn sie vollständig in die Hülle eingeschoben ist. Ein herausgebrochener Bereich 701 in Fig. 7 zeigt die Lage des Kontaktblocks 302, wenn die Ausrichtungsstreifen 304 auf der M-Karte 301 in der Öffnung 403 sichtbar sind. Dadurch wird angezeigt, daß sich der Kontaktblock 302 in der Kontaktposition befindet, in der er mit den Gegenkontakten der Hülle in Kontakt steht. Eine Schnapp- oder Festhaltevorrichtung kann ebenfalls vorgesehen sein, um die M-Karte in ihrer richtigen Kontaktlage zu halten.

Fig. 8 stellt ein Blockschaltbild der M-Karte 301 für den Fall dar, daß sie mit der Hülle 401 in Kontakt steht. Beide sind durch gestrichelte Umrandungslinien dargestellt. Die Teile der Karte 301 sind mit den in Fig. 2 dargestellten Teilen identisch, mit dem einzigen Unterschied, daß die Tastatur 102, die Anzeige 103 und die Stromversorgungsquelle 229 nunmehr in der Hülle 401 angeordnet sind. Die Hülle 401 enthält ferner Steckverbinder 802 und 803, die den Kontakt mit den Gegenkontakten 219 und 220 der Karte herstellen. Außerdem enthält die Hülle Tastencodiermittel 801, die der seriellen Eingabe von Tastensignalen in die E/A-Einheit 218 dienen.

Da die Funktion der Kombination oder Anordnung aus Hülle und Karte im Prinzip mit der Funktion der autonomen Karte nach Fig. 2 identisch ist, wird die Funktion nachstehend lediglich einmal beschrieben.

Die Fig. 2 und 8 stellen Blockschaltbilder einer Schaltungsanordnung einer Karte bzw. einer Kombination aus Karte und Hülle dar, die sowohl die Mittel für die Unterbenutzer- als auch die Wertveränderungsfunktion enthält. Zunächst wird die Unterbenutzer-Funktion beschrieben. Vor Beginn des Betriebs führt der Karteninhaber die Karte in die Hülle ein, wobei er sie - durch Ausrichtung der Ausrichtstreifen 304 mit dem Fenster 403 - in die Kontaktlage in bezug auf die Hülle bringt. Dann betätigt der Karteninhaber die M-Taste 106. Das dadurch erzeugte Signal wird in der Tastencodiereinheit 801 seriell über die Anschlüsse 802 und 219 in die M/WV-Logik 201 übertragen, die durch dieses Signal aktiviert wird.

Die Logik 201 veranlaßt dann den Programmspeicher 230 zur Ausgabe der richtigen Anweisungstexte auf der Anzeige 103, um den Karteninhaber während der Bedienung zu leiten. Die nachstehenden Texte auf der Anzeige 103 werden jeweils durch den vorhergehenden Betriebsschritt ausgelöst. All dies ist in Fig. 9 als Flußdiagramm dargestellt.

Nach Aktivierung durch das Signal der M-Taste 106 veranlaßt die Logik 201 die Standard-Kartenlogik 208 zur Prüfung der PIN des Karteninhabers in herkömmlicher Weise. Wenn die PIN richtig ist, löst die Logik 208 ein Signal an die Logik 201 aus, die dann den Karteninhaber über die Anzeige auffordert, die PIN des Unterbenutzers (M-PIN) einzugeben. Um sicherzustellen, daß es sich bei der eingegebenen PIN tatsächlich um diejenige handelt, die der Karteninhaber wünscht, aktiviert die Logik 201 erneut das Textprogramm 230, um vom Karteninhaber das "0K" anzufordern. Der Karteninhaber betätigt dann die ""OK"-Taste 108, deren im Tastencodierer 801 codiertes Signal die Logik 201 veranlaßt, die Unterbenutzer-PIN im Unterbenutzer-PIN-Speicher 207 zu speichern und die PIN von außen unzugänglich zu machen. Die Logik 201 löst die Logik 208 aus, um ein Unterbenutzer-Transaktionskonto 225 im Arbeitsspeicher 224 zu eröffnen.

Die Möglichkeit, eine spezielle Dienstleistung zu aktivieren, die nur in einer Mehrgesellschafts- oder Mehrdienstleistungs-Karte relevant ist, kann ebenfalls vorgesehen sein. Diesbezügliche Einzelheiten sind hier jedoch nicht aufgenommen, da sie keinen Teil der Erfindung bilden. Entsprechende Schritte, wie sie in Fig. 9 dargestellt sind, können dür diese Möglichkeit sorgen.

Das Unterbenutzer-Programm 206 veranlaßt dann das Textprogramm 230, den Karteninhaber über die Anzeige 103 zur Eingabe des Kreditbetrags für das Unterbenutzer-Transaktionskonto aufzufordern. Nach Auslösung der Logik 208, um in herkömmlicher Weise zu prüfen, ob das Transaktionskonto des Karteninhabers hinreichend gedeckt ist, um den Kreditbetrag vom Transaktionskonto des Karteninhabers auf das Transaktionskonto des Unterbenutzers zu transferieren, wird der für das Unterbenutzer- Transaktionskonto gewünschte Betrag durch das interne Transaktionsprogramm 204 über die Logik 201 intern vom Karteninhaber-Konto auf das Unterbenutzer-Transaktionskonto 225 im Arbeitsspeicher 224 transferiert. Wenn es sich bei der Karte um eine Debetkarte handelt, die für einen Zugang zum Bankkonto des Karteninhabers verwendet werden soll, enthält die Karte normalerweise keinen Speicher zum Speichern eines Karteninhaber-Transaktionslimits. Die erfindungsgemäße Karte enthält jedoch einen Unterbenutzer-Speicher zum Speichern eines maximalen Unterbenutzer-Transaktionsbetrags, über den der Unterbenutzer zur Durchführung von Transaktionen mittels der Debetkarte verfügen kann.

Wenn die Verfügungsgewalt des Unterbenutzers über sein Transaktionskonto zeitlich auf eine bestimmte Frist (Zeitspanne) begrenzt werden soll, wird der Karteninhaber in ähnlicher Weise wie bei der Kreditübertragungsfunktion durch das Unterbenutzer-Programm zur Eingabe dieser Frist aufgefordert. Die Logik 201 veranlaßt dann die Logik 208 zur Eingabe dieser Frist in den Benutzungsfristen-Speicher 226 im Arbeitsspeicher 224. Die Unterbenutzer-Frist wird dann dem Unterbenutzer-Transaktionskonto zugeordnet. Wenn die M-Karte durch einen Unterbenutzer für eigene Transaktionen benutzt werden soll, ist das Verfahren wie üblich. Der einzige Unterschied liegt darin, daß die logik 208 - bei der Prüfung der PIN - nicht nur Zugang zum Karteninhaber-PIN-Speicher 210, sondern auch zum Unterbenutzer-PIN-Speicher 207 hat. Das PIN-Prüfprogramm 211 im Programmspeicher 217 ist entsprechend angepaßt. Zunächst prüft es, ob die vom Benutzer eingegebene PIN im Karteninhaber-PIN-Speicher 210 verfügbar ist, und wenn dies nicht der Fall ist, überprüft es den Unterbenutzer-PIN-Speicher 207. Wenn die eingegebene PIN in keinem der beiden Speicher festgestellt werden kann, löst die Logik das Verfahren "falsche PIN" aus. Wenn die eingegebene PIN im Unterbenutzer-PIN-Speicher 207 festgestellt wird, wird die normale Transaktion oder ein anderes Programm durch die Logik 208 ausgelöst.

Das Flußdiagramm nach Fig. 10 zeigt, wie die Unterbenutzer-Befugnis durch den Karteninhaber gelöscht wird. Das Unterbenutzer-Programm 206 nach den Fig. 2 und 8 bewirkt jedoch ebenfalls, daß die Logik 201 automatisch eine Unterbenutzer-PIN aus dem Unterbenutzer-PIN-Speicher 207 löscht, wenn der positive Kontostand des Transaktionskontos 225 des Unterbenutzers Null wird oder die Unterbenutzer-Frist im Speicher abläuft, je nachdem, was zuerst der Fall ist.

Das Interne-Transaktionen-Program in Speicher 204 bewirkt, daß die Logik 201 einen eventuell noch vorhandenen positiven Kontostand vom Transaktionskonto des Unterbenutzers auf das Transaktionskonto des Karteninhabers, die sich beide im Transaktionsspeicher 225 befinden, transferiert. Ferner bewirkt es den Tranfer individueller Transaktionen des Unterbenutzers vom Unterbenutzer-Transaktionskonto zum Karteninhaber-Transaktionskonto unter Anbringung der Unterbenutzer-PIN an diese individuellen Transaktionen zur späteren Rechnungsprüfung. Dann bewirkt das Unterbenutzer-PIN-Programm im Speicher 206, daß die Logik 208 über die Logik 201 die Unterbenutzer-First im Speicher 226 löscht.

Der Unterbenutzer benutzt und betätigt die Karte in der gleichen Weise wie der Karteninhaber. Das gesamte Verfahren innerhalb des Systems ist nun jedoch auf die vorprogrammierten Kredit- und Benutzungsdaten des Unterbenutzers bezogen und beschränkt.

Das Verfahren läuft im Prinzip wie folgt ab:

- der Automat prüft die Kartenauthentizität;
- die Karte prüft die Unterbenutzer-Identität (nachdem der Unterbenutzer seine PIN eingegeben hat);
- der Kartenaufnahmeautomat prüft die verfügbaren Kontostände (des Unterbenutzers) und die Frist (das Ende der Befugnis des Unterbenutzers) und
- wenn Kontostand und Frist "OK" sind, führt die Kartenaufnahmevorrichtung die Transaktion durch und aktualisiert den Unterbenutzer-Transaktionsspeicher in der Karte.

Das M-Karten-Unterbenutzer-PIN-Verfahren ist daher wie ein "Karte-in-der-Karte-System".

Wenn der Kredit des Unterbenutzers aufgebraucht oder die Frist abgelaufen ist, setzt das Programm in der Karte den Unterbenutzer-Transaktions-Speicher auf Null zurück und (re)-transferiert einen etwa nicht aufgebrauchten Kreditbetrag aus dem Unterbenutzer-Transaktionsspeicher in den Karteninhaber-Transaktions-(Kredit)-Speicher. Gleichzeitig werden die individuellen Transaktionen des Unterbenutzers in den Karteninhaber-Transaktionsspeicher übertragen. Um sie zur späteren Rechnungsprüfung identifizierbar zu halten, wird die betreffende Unterbenutzer-PIN-(M-PIN) dem oder den Beträgen der Unterbenutzer-Transaktion(en), z.B. als Präfix, zugeordnet.

Gleichzeitig mit dem Schließen des Unterbenutzer- Trans-aktionskontos(-speichers), wird die Unterbenutzer-PIN ebenfalls gelöscht (automatische Kartenfunktion).

Derartige Abschlußfunktionen erfolgen entweder am Ende der letzten Transaktion, durch die der gesamte Kredit oder dessen Rest aufgebraucht wird, oder wenn die Karte, nach Fristablauf, das nächste Mal in einer Kartenaufnahmevorrichtung benutzt wird, die einen Kalender (eine Echtzeituhr) enthält oder das Datum von einem Hilfscomputer erhält.

Wenn die "Hülle" einen Kalender aufweist, erfolgt die Löschung bei der nächsten Einführung der Karte nach dem Ablaufdatum in die Hülle.

Die Flußdiagramme nach den Fig. 11 und 12 veranschaulichen eine Wertveränderungs-Programmierung (WV-Taste). Fig. 11 zeigt die Alternative, wenn der Karteninhaber sich durch das Info-Programm im Speicher 216 über den für eine derartige Operation verfügbaren Kreditbetrag informieren kann. Fig. 12 zeigt das Flußdiagramm ohne die "Info"-Funktion.

Der sich auf die Wertveränderung beziehende Abschnitt des Textprogramms in Speicher 230 kann auf verschiedene Weise programmiert werden. Die Funktion wird am Beispiel "Währungsumtausch" erläutert. Ein Karteninhaber oder Unterbenutzer gibt in sein Transaktionskonto im Speicher 225 einen bestimmten Kreditbetrag in einer vorbestimmten Originalwährung ein. Zu einem bestimmten Zeitpunkt möchte er über eine andere Währung verfügen. Da sowohl der Karteninhaber als auch der Unterbenutzer diese Funktion benutzen können, werden sie nachstehend bei der Beschreibung dieser Funktion beide als "Benutzer" bezeichnet.

Um die Funktion einzuleiten, betätig der Benutzer die "WV"-Taste 107. Das Tastensignal veranlaßt das Wertveränderungsprogramm im Speicher 205, den Benutzer aufzufordern, seine Autorisation bzw. Berechtigung oder Befugnis durch Eingabe seiner PIN nachzuweisen. So weit ist das Verfahren das gleiche wie bei der zuvor erläuterten Unterbenutzer-Funktion. Wenn die eingegebene PIN als richtig indentifiziert worden ist, veranlaßt das Wertveränderungs-Programm im Speicher 205 den Aufruf des Auslands- oder Fremdwährungs-Bezeichnungsmenus im Speicher 221. Für diesen Fall ist eine Auswahl der Bezeichnungen fremder Währungen in diesem Speicher vorprogrammiert. Der Benutzer kann nunmehr die WV-Taste 107 wiederholt betätigen, wodurch die Logik 201, gesteuert durch das Wertveränderungsprogramm in Speicher 205, veranlaßt wird, nach jeder Tastenbetätigung die nächste Fremdwährungsbezeichnung in vorbestimmter Reihenfolge anzuzeigen.

Wenn die gewünschte Währung in der Anzeige erscheint, betätigt der Benutzer die "OK"-Taste, deren Signal dann das Wertveränderungsprogramm veranlaßt, den Benutzer über die Anzeige nach dem Betrag zu fragen. Der Benutzer gibt dann den Betrag mittels der numerischen Tastatur 111 ein. Danach prüft das Programm, wie bei der Funktion "Unterbenutzer-Programmierung", ob der eingegebene Betrag nach dem Kontostand im Karteninhaber- oder Unterbenutzer-Transaktionskonto-Speicher 225 verfügbar ist. Wenn das Kreditkonto hinreichend gedeckt ist, transferiert das interne Transaktionsprogramm des Speichers 204 den gewählten Betrag aus dem Karteninhaber- oder Unterbenutzer-Transaktionsspeicher 225 in den Zwischenspeicher 212. Dann löst das Wertveränderungsprogramm im Speicher 205 das Rechenprogramm im Speicher 213 zur Umrechnung des Betrags der ursprünglichen Währung (mittels des entsprechenden Wechselkurses im Speicher 222) in den Betrag der gewählten Fremdwährung aus.

Der sich ergebende Betrag der Fremdwährung wird dann in den WV-Transaktionsspeicher 227 übertragen. Das Wertveränderungsprogramm im Speicher 205 bewirkt die Zuordnung der Fremdwährungsbezeichnung zu diesem Betrag, der im WV-Speicher 227 gespeichert ist.

Diese Funktion bezieht sich auf einen Umtausch von Währungen auf der Basis fester Wechselkurse. Diese festen Wechselkurse werden vorstehend als Umrechnungs- oder Änderungsfaktoren bezeichnet.

Bei schwankendem Wechselkurs zwischen einer Originalwährung und einer Fremdwährung wird das Verfahren aufgeteilt: Zum einen auf eine Gruppe von M-Karten-Funktionen, umfassend die Auswahl der Bezeichnung einer Fremdwährung, in die umgewechselt werden soll, und die Übertragung des gewünschten Betrags aus dem M-Karten-Transaktionsspeicher 225 in den Zwischenspeicher 212, und zum anderen in eine Gruppe von äußeren Automatenfunktionen, umfassend die Berechnung des Betrags der Fremdwährung auf der Basis des augenblicklichen (schwankenden) Wechselkurses und das Aufrufen des Wertveränderungsprogramms im Speicher 205 in der M-Karte zum Einspeichern des berechneten Betrags der Fremdwährung in den Wertveränderungs-Transaktionsspeicher 227 unter gleichzeitiger Löschung des Betrags der Originalwährung im Zwischenspeicher 212. Durch Programme im Automaten werden die Bezeichnung der Fremdwährung und der Wechselkurs, der zur Berechnung der Fremdwährung verwendet wird, dem übertragenen Betrag der Fremdwährung, der jetzt in dem Wertveränderungsspeicher gespeichert ist, zugeordnet, um später den nichtverbrauchten Fremdwährungsbetrag wieder in die Originalwährung zurückzutauschen. Das heißt, die Bezeichnung und der Wechselkurs werden an den im Wertveränderungs-Speicher gespeicherten Betrag als Affix angehängt, so daß zum einen irgendwelche Transaktionen, bei denen der Speicher verwendet wird, unter Berücksichtigung der Währungsbezeichnung durchgeführt werden und zum anderen eine faire Art des Rückumtausches gewährleistet ist, damit weder die Ausgabeorganisation noch der Karteninhaber einen finanziellen Nachteil erleiden, wenn sich der Wechselkurs zwischen dem Umtausch-Zeitpunkt und dem Rückumtausch-Zeitpunkt geändert hat, was sich grundsätzlich von dem derzeitigen Verfahren unterscheidet, bei dem eine Person oder eine Organisation, z.B. ein Geschäftsbetrieb, den Verlust akzeptieren muß, wenn sich der Wechselkurs in einer ungünstigen Richtung geändert hat.

Die Flußdiagramme nach den Fig. 11, 12 und 13 veranschaulichen das Verfahren des Umtausches bei schwankenden Wechselkursen. Das Flußdiagramm nach Fig. 14 veranschaulicht das Verfahren des Rückumtausches.

Die Fig. 15 und 16 stellen einen Ausgabeautomaten 1501 für eine M-Karte, die als Besuchergutschein (ViVo) dienen soll, dar. Bei dieser Ausführungsform ist der Ausgabeautomat so ausgebildet, daß sich die Bedienungsperson (Bank- oder Regierungsangestellter) und der Besucher gegenübersitzen. Fig. 15 stellt das Bedienungsfeld aufseiten der Bedienungsperson und Fig. 16 das Bedienungsfeld aufseiten des Besuchers dar.

Nach Fig. 15 hat der Automat aufseiten der Bedienungsperson eine Anzeige 1502, eine alphanumerische Tastatur 1504, eine "Start"-Taste 1506, eine "OK"-Taste 1505, eine PIN-Tastatur 1507, eine Währungswähltastatur 1509, einen Kundenbeleg-Drucker 1503, einen Schlitz 1510 für die Heimat-Kredit/Debet-Karte eines Besuchers und einen Auslandsbanknoten-Akzeptor 1511. Der Einführungsschlitz 1510 für die Heimatkredit/Debet-Karte des Besuchers könnte auch auf der Besucherseite angeordnet sein. 1508 ist eine Rücksetz-Taste.

Nach Fig. 16 hat der Automat ferner aufseiten des Besuchers eine Anzeige 1602, eine PIN-Tastatur 1604, eine "OK"-Taste 1605 und eine (M)ViVo-Karten-Stapel- und Ausgabevorrichtung 1606.

Fig. 17 ist ein Blockschaltbild des ViVo-Karten-Ausgabeautomaten. Neben den äußerlich sichtbaren Elementen enthält der Automat eine Verarbeitungseinheit 1701, einen Programmspeicher 1702, einen PIN-Zwischenspeicher 1703 (der zur Verfügung steht, wenn die gespeicherte PIN aufgezeichnet wird), einen Wechselkursspeicher 1706, eine allgemeine Besucher-Datei 1704 und eine Automatenjournal- und -rechnungsprüfungs-Datei 1705.

Die von der Bedienungsperson und dem Besucher durchzuführenden Maßnahmen und die Automatenfunktionen sind im Flußdiagramm nach Fig. 18 dargestellt.

Fig. 19 stellt eine perspektivische Ansicht eines (M-)ViVo-Karten-Rückgabeautomaten 1801 dar, der am Ort der Abreise des Besuchers die Rückgabe-Vivo-Karte akzeptiert. Der Automat enthält eine Besucheranzeige 1802 und - im besucher-Bedienungsfeld 1807 - eine "Start"-Taste 1806, eine "OK"-Taste 1805, eine PIN-Tastatur 1804, einen Besucherbeleg- Drucker 1803 und eine Banknoten-Ausgabevorrichtung 1809. Durch einen Kartenrückgabe-Einwurfschlitz 1808 gibt der Besucher die Karte zurück.

Fig. 20 stellt ein Blockschaltbild des Automaten nach Fig. 19 dar, der eine zentrale Verarbeitungseinheit 1901, einen Programmspeicher 1902, einen PIN-Zwischenspeicher 1903, eine allgemeine Besucherdatei 1904 und eine Automatenjournal- und Rechnungsprüfungsdatei 1905 aufweist.

Fig. 21 stellt ein Flußdiagramm zur Erläuterung des ViVo-Kartenrückgabe-Betriebs und der Funktion des Rückgabeautomaten dar.

**Patentansprüche**

1. Schaltungsanordnung mit einer zumindest einen Teil der Anordnung enthaltenden Karte (101; 301; 510) für Geschäfts-, Identifizierungs- und/oder Betätigungszwecke; mit einem in der Karte (101; 301; 510) enthaltenen Karteninhaber-Speichermittel (210, 224; 512) zum Speichern eines persönlichen Karteninhaber-Berechtigungsmerkmals (PIN); einem in der Karte (101; 301; 510) enthaltenenen programmirebaren Speichermittel (207, 224; 512) zum Speichern wenigstens eines weiteren Berechtigungsmerkmals; und einem Authentikations-Prüfmittel (208, 209, 211) zur Authentikation eines persönlichen Berechtigungsmerkmals als dem gespeicherten persönlichen Karteninhaber-Berechtigungsmerkmal (PIN) entsprechend, dadurch gekennzeichnet, daß das programmierbare Speichermittel (207, 224; 512) ein Unterbenutzer-Speichermittel aufweist, in dem wenigstens ein persönliches Unterbenutzer-Berechtigungsmerkmal (UNT-PIN) speicherbar ist, daß ein Programmiermittel (102, 201, 206) zum Programmieren des programmierbaren Unterbenutzer-Speichermittels mit wenigstens einem nur durch den berechtigten Karteninhaber wählbaren persönlichen Unterbenutzer-Berechtigungsmerkmal (UNT-PIN) vorgesehen ist, daß das Programmiermittel (102, 201, 206) durch das Authentikations-Prüfmittel (208, 209, 211) bei Authentikation des persönlichen Karteninhaber-Berechtigungsmerkmals (PIN) freigebbar ist, und daß das Authentikations-Prüfmittel (208, 209, 211) auch die Authentikation eines persönlichen Berechtigungsmerkmals als einem persönlichen Unterbenutzer-Berechtigungsmerkmal entsprechend bewirkt, das in dem Unterbenutzer-Speichermittel gespeichert ist.

2. Anordnung nach Anspruch 1, dadurch gekennzeichnet, daß ein Betätigungselement (106) vorgesehen ist, dessen Betätigung vor der durch das Authentikations-Prüfmittel (208, 209, 211) bewirkten Authentikation ausschließlich die Freigabe des Programmiermittels (102, 201, 206) auslöst.

3. Anordnung nach Anspruch 1, dadurch gekennzeichnet, daß das programmierbare Unterbenutzer-Speichermittel (207, 224; 512) ein Unterbenutzer-Benutzungslimit speichern kann, daß das Programmiermittel (102, 201, 206) auch zum Programmieren des programmierbaren Unterbenutzer-Speichermittels mit einem ausgewählten Unterbenutzer-Benutzungslimit ausgebildet ist, daß das Authentikations-Prüfmittel (208, 209, 211) bei Authentikation eines persönlichen Berechtigungsmerkmals als dem gespeicherten persönlichen Karteninhaber-Berechtigungsmerkmal entsprechend den Zugang zu dem Programmiermittel (102, 201, 206) gestattet, um das Unterbenutzer-Speichermittel mit einem Unterbenutzer-Benutzungslimit zu programmieren, und daß das Authentikations-Prüfmittel bei Authentikation eines persönlichen Berechtigungsmerkmals als einem Unterbenutzer-Berechtigungsmerkmal entsprechend, das in dem Unterbenutzer-Speichermittel gespeichert ist, den Zugang zu dem Unterbenutzer-Speichermittel zur Durchführung von Aktivitäten innerhalb des in dem Unterbenutzer-Speichermittel (207, 224; 512) gespeicherten Unterbenutzer-Benutzungslimits gestattet.

4. Anordnung nach Anspruch 1, dadurch gekennzeichnet, daß das Karteninhaber-Speichermittel (210, 224; 512) ein Karteninhaber-Transaktionswerlimit speichern kann, daß das Unterbenutzer-Speichermittel ein Unterbenutzer-Transaktionswertlimit speichern kann, daß die Anordnung ein Transaktionsmittel (208, 214) zur Durchführung von Transaktionen aufweist, die zur Anderung wenigstens des einen der beiden Karteninhaber- und Unterbenutzer-Transaktionswertlimits führen, und daß das Authentikations-Prüfmittel (208, 209, 211) bei Authentikation eines persönlichen Berechtigungsmerkmals als einem Karteninhaber- oder Unterbenutzer-Berechtigungsmerkmal entsprechend den Zugang zu dem Transaktionsmittel (208, 214) zur Durchführung von Transaktionen gestattet.

5. Anordnung nach Anspruch 1, gekennzeichnet durch ein Eingabemittel (102) zum Eingeben eines Karteninhaber-und/oder Unterbenutzer-Berechtigungsmerkmals.

6. Anordnung nach Anspruch 1, dadurch gekennzeichnet, daß die persönlichen Karteninhaber- und Unterbenutzer-Berechtigungsmerkmale ein persönliches Identifizierungsmerkmal aufweisen.

7. Anordnung nach Anspruch 1, dadurch gekennzeichnet, daß das programmierbare Unterbenutzer-Speichermittel (207, 224; 512)) eine vorgewählte Frist speichert, die über die Programmiermittel (102, 201, 206) in das Unterbenutzer-Speichermittel (207, 224; 512) einspeicherbar ist, und daß das Authentikations-Prüfmittel (208, 209, 211) eine Authentikation des Unterbenutzer-Berechtigungsmerkmals nur während dieser Frist bewirkt.

**8.** Anordnung nach Anspruch 5, gekennzeichnet durch ein Anzeigemittel (103) zum Anzeigen von Informationen zur Unterstützung des Betriebs des Programmiermittels (102, 201, 206) und des Authentikations-Prüfmittels (208, 209, 211).

**9.** Anordnung nach Anspruch 7, dadurch gekennzeichnet, daß das Authentikations-Prüfmittel (208, 209, 211) nach Ablauf der Frist das Unterbenutzer-Berechtigungsmerkmal aus dem programmierbaren Unterbenutzer-Speichermittel (207, 224; 512) löscht.

**10.** Anordnung nach Anspruch 3, dadurch gekennzeichnet, daß das Authentikations-Prüfmittel (208, 209, 211) bei Erreichen des Unterbenutzer-Benutzungslimits automatisch das persönliche Unterbenutzer-Berechtigungsmerkmal aus dem programmierbaren Unterbenutzer-Speichermittel (207, 224; 512) löscht.

**11.** Anordnung nach Anspruch 7, dadurch gekennzeichnet, daß das Karteninhaber-Speichermittel (210, 224; 512) ein Karteninhaber-Transaktionswertlimit speichern kann, daß das Unterbenutzer-Speichermittel ein Unterbenutzer-Transaktionswertlimit speichern kann, daß die Anordnung ein Transaktionsmittel (201, 204, 208) zur Durchführung von Transaktionen aufweist, die zur Änderung des Karteninhaber- und/oder Unterbenutzer-Transaktionswertlimits führen, daß das Authentikations-Prüfmittel (208, 209, 211) bei Authentikation eines persönlichen Berechtigungsmerkmals als einem Karteninhaber- oder Unterbenutzer-Berechtigungsmerkmal entsprechend den Zugang zu dem Transaktionsmittel (201, 204, 208) zur Durchführung von Transaktionen gestattet, daß das Programmiermittel (102, 201, 206) das Karteninhaber-Transaktionswertlimit um den Betrag des Unterbenutzer-Transaktionswertlimits verringert, wenn das Unterbenutzer-Transaktionswertlimit in das programmierbare Unterbenutzer-Speichermittel (207, 224; 512) einprogrammiert ist, und daß das Authentikations-Prüfmittel (208, 209, 211) das Karteninhaber-Transaktionswertlimit um ein Unterbenutzer-Transaktionswertlimit erhöht, das in dem Unterbenutzer-Speichermittel (207, 224; 512) bei Ablauf der Frist verblieben ist, und das Unterbenutzer-Transaktionswertlimit auf Null verringert.

**12.** Anordnung nach Anspruch 8, gekennzeichnet durch eine Mehrbenutzer-Karte (301), die das Karteninhaber-und programmierbare Speichermittel (207, 210, 224), das Programmiermittel (201, 206) und das Authentikations-Prüfmittel (208, 209, 211) aufweist, und eine Mehrbenutzer-Karten-Hülle (401), die wenigstens das Eingabemittel (102) und das Anzeigemittel (103) aufweist, wobei die Mehrbenutzer-Karte (301) und die Mehrbenutzer-Karten-Hülle (401) Kontakte (303; 219, 220; 802, 803)) aufweisen, die in einer Kontaktposition der Karte (301) in der Hülle (401) miteinander verbindbar sind, um eine Kommunikation zwischen dem Anzeigemittel (103) und dem Eingabemittel (102) einerseits und dem Programmier- und Authentikations-Prüfmittel andererseits zu bewirken.

**13.** Anordnung nach Anspruch 12, dadurch gekennzeichnet, daß die Mehrbenutzer-Karten-Hülle (401) eine Stromversorgungsquelle (229) aufweist.

**14.** Anordnung nach Anspruch 12 oder 13, dadurch gekennzeichnet, daß die Abmessungen der Karten-Hülle (401) so gewählt sind, daß die Karte (301) vollständig darin aufnehmbar ist, und daß die Kontaktposition der Karte (301) bei teilweise aus der Hülle (401) herausgezogener Karte (301) vorliegt.

**15.** Anordnung nach Anspruch 8, dadurch gekennzeichnet, daß die Anordnung eine tragbare Karte (101) mit dem Speichermittel sowie dem Programmier-, Eingabe-, Authentikations-Prüf- und Anzeigemittel aufweist.

**16.** Anordnung nach Anspruch 4, dadurch gekennzeichnet, daß das Karteninhaber-Transaktionswertlimit aus Einheiten einer bestimmten Wertbezeichnung besteht und die Anordnung ein Wertumrechnungsmittel (201, 205, 208, 213) zum Ändern des gewählten Wertes einer Bezeichnung in den Wert einer gewählten anderen Bezeichnung aufweist.

**17.** Anordnung nach Anspruch 16, dadurch gekennzeichnet, daß durch das Wertumrechnungsmittel (201, 205, 208, 213) eine gewählte Anzahl von Einheiten einer originalen Bezeichnung umrechenbar ist, daß die Anordnung ein programmierbares Speichermittel (227) zum Speichern der Anzahl von Einheiten des Wertes der geänderten Bezeichnung nach Umbewertung durch das Wertumrechnungsmittel aufweist, daß durch das Wertumrechnungsmittel die gewählte Anzahl von Einheiten der originalen Bezeichnung von einem der gespeicherten Transaktionswertlimits subtrahierbar ist und daß durch das Authentikations-Prüfmittel (208, 209, 211) der Zugang zu dem Wertumrechnungsmittel bei Authentikation eines der persönlichen Berechtigungsmerkmale gewährbar ist.

**18.** Anordnung nach Anspruch 16, dadurch gekennzeichnet, daß die Anordnung einen Menu-Speicher (221) zum Speichern von Umrechnungsfaktoren zum Ändern eines gewählten Wertes einer Bezeichnung in den Wert einer gewählten anderen Bezeichnung aufweist und daß das Wertumrechnungsmittel (201, 205, 208, 213) so betreibbar ist, daß es einen Umrechnungsfaktor aus dem Menu-Speicher (221) zum Ändern des gewählten Wertes wählt.

**19.** Anordnung nach Anspruch 4, dadurch gekennzeichnet, daß die Anordnung eine Mehrbenutzer-Karte (101) mit dem Karteninhaber- und dem programmierbaren Speichermittel (207, 210, 224), dem Programmiermittel (102, 201, 206) und dem Authentikations-Prüfmittel (208, 209, 211) aufweist, die betriebsmäßig mit einer Ausgabe-Vorrichtung (1501) verbindbar sind, die ein Speichermittel (1706) zum Speichern von Wechselkursen mehrerer Währungen zum Vergleichen des Einheitswertes einer jeden mit dem Wert eines durch die Ausgabe-Vorrichtung (1501) ausstellbaren Besucher-Gutscheins und ein Einspeicherungsmittel (1701, 1702) zum Einspeichern des Transaktionswertlimits, das einer berechneten Besucher-Gutschein-Anzahl entspricht, die ihrerseits einem von der Ausgabe-Vorrichtung aufgenommenen Währungswert entspricht, in das Karteninhaber-Speichermittel (210, 224) aufweist.

**20.** Anordnung nach Anspruch 19, dadurch gekennzeichnet, daß die Ausgabe-Vorrichtung (1501) ein Wertaufnahmemittel (1510, 1511) zum Aufnehmen eines Werts in jeder der Währungen aufweist.

**21.** Anordnung nach Anspruch 19, dadurch gekennzeichnet, daß die Ausgabe-Vorrichtung (1501) ein Merkmalwählmittel (1507) zum Wählen eines einzigartigen persönlichen Karteninhaber-Berechtigungsmerkmals aufweist und daß das Programmiermittel (102, 201, 206) das gewählte Karteninhaber-Berechtigungsmerkmal in das Karteninhaber-Speichermittel (210, 224) einspeichert.

**22.** Anordnung nach Anspruch 1, dadurch gekennzeichnet, daß die Anordnung eine Karte (510) mit einem Magnetstreifen (512) aufweist, der das programmierbare Unterbenutzer-Speichermittel aufweist.

**23.** Anordnung nach Anspruch 12, dadurch gekennzeichnet, daß die Anordnung einen Magnetstreifen (512) auf der Karte (510) aufweist, der das Karteninhaberund das programmierbare Speichermittel aufweist, und daß die Hülle (401) einen Schlitz (502) zur Aufnahme der Karte (510) und einen mit der Hülle (401) verbundenen Lese/Schreib-Kopf (504, 506) in dem Schlitz zum Lesen und Aufzeichnen von Daten von und auf dem Magnetstreifen aufweist.

**24.** Anordnung nach einem der Ansprüche 1 bis 23, dadurch gekennzeichnet, daß die Karte einen Mikroprozessor aufweist, der das programmierbare Speichermittel zur Aufnahme von Daten aufweist, die zur Durchführung einer Transaktion mittels der Karte verwendbar sind.

**25.** Anordnung nach einem der Ansprüche 12 bis 14, dadurch gekennzeichnet, daß die Hülle (401) ein Fenster (304) aufweist, daß die Karte (301) auf ihrer Außenseite eine Markierung (403) aufweist und daß die relative Lage von Karte (301) und Hülle (401), in der sie miteinander in Kommunikationsverbindung stehen, dann hergestellt ist, wenn die Markierung in dem Fenster (304) sichtbar ist.

**Claims**

**1.** Circuitry of which at least a part contains a card (101; 301; 510) for business, identification and/or actuation purposes; the circuitry comprising within the card (101; 301; 510) a cardholder memory means (210; 224; 512) for storing a cardholder personal enabling character (PIN); a programmable sub-user memory means (207, 224; 512) within the card (101; 301; 510) for storing at least one further enabling character; and an authenticity checking means (208, 209, 211) for authenticating a personal enabling character as corresponding to the stored cardholder personal enabling character (PIN), characterized in that the programmable memory means (207, 224; 512) comprises a sub-user memory means adapted to store at least one sub-user personal enabling character (SUB-PIN), that a programming means (102, 201, 206) is provided for programming the programmable sub-user memory means with at least one sub-user personal enabling character (SUB-PIN) selectable only by the authenticated cardholder, that the programming means (102, 201, 206) is adapted to be enabled by the authenticity checking means (208, 209, 211) upon authentication of the cardholder personal enabling character (PIN), and that the authenticity checking means (208, 209, 211) also executes the authentication of a personal enabling character as corresponding to a sub-user personal enabling caracter stored in the sub-user storing means.

2. Circuitry of claim 1, characterized in that there is provided an operating element (106), the operation of which before the authentication executed by the authenticity checking means (208, 209, 211) releases exclusively the enabling of the programming means (102, 201, 206).

3. Circuitry of claim 1, characterized in that the programmable sub-user memory means (207, 224; 512) can store a sub-user use limit, that the programming means (102, 201, 206) is also adapted for programming the programmable sub-user memory means with a selected sub-user use limit, that the authenticity checking means (208, 209, 211) upon authenticating a personal enabling character as corresponding to the stored cardholder personal enabling character permits access to the programming means (102, 201, 206) for programming the sub-user memory means with a sub-user use limet and that the authenticity checking means upon authenticating a personal enabling character as corresponding to the sub-user personal enabling character stored in the sub-user memory means permits access to the sub-user memory means for conducting activities wihtin the sub-user use limet stored in the sub-user memory means (207, 224; 512).

4. Circuitry of claim 1, characterized in that the cardholder memory means (210, 224; 512) can store a cardholder transaction value limit, that the sub-user memory means can store a sub-user transaction value limit, that the circuitry comprises a transaction means (208, 214) for conducting tansactions resulting in a change of at least one of the cardholder and sub-user transaction value limits, and that the authenticity checking means (208, 209, 211) upon authenticating a personal enabling character as corresponding to a cardholder or sub-user personal enabling character permits access to the transaction means (208, 214) for conducting transactions.

5. Circuitry of claim 1, characterized by an input means (102) for inputting at least one of a cardholder and sub-user enabling character.

6. Circuitry of claim 1, characterized in that the cardholder and sub-user personal enabling characters comprise a personal identification character.

7. Circuitry of claim 1, characterized in that the programmable sub-user memory means (207, 224; 512) stores a preselected term which is programmable into the sub-user memoriy means (207, 224; 512) through the programming means (102, 210, 206), and that the authenticity checking means (208, 209, 211) authenticates the sub-user enabling character only during this term.

8. Circuitry of claim 5, characterized by a display means (103) for displaying information to aid in the operation of the programming means (102, 201, 206) and the authenticity checking means (208, 209, 211).

9. Circuitry of claim 7, characterized in that the authenticity checking means (208, 209, 211) erases the sub-user personal enabling character from the programmable sub-user memory means (207, 224; 512) upon the expiration of the term.

10. Circuitry of claim 3, characterized in that the authenticity checking means (208, 209, 211) automatically erases the sub-user personal enabling character from the programmable sub-user memory means (207, 224; 512) upon arriving at the sub-user use limit.

11. Circuitry of claim 7, characterzed in that the cardholder memory means (210, 224; 512) can store a cardholder transaction value limit, that the sub-user memory means can store a sub-user transaction value limit, that the circuitry comprises a transaction means (201, 204, 208) for conducting transactions resulting in a change of at least one of the cardholder and sub-user transaction value limits, that the authenticity checking means (208, 209, 211) upon authenticating a personal enabling character as corresponding to one of the cardholder and sub-user personal enabling characters permits access to the transaction means (201, 204, 208) for conducting transactions, that the programming means (102, 201, 206) reduces the cardholder transaction value limit by the amount of the sub-user transaction value limit when the sub-user transaction value limit is programmed into the programmable sub-user memory means (207, 224; 512), and that the authenticity checking means (208, 209, 211) increases the cardholder transaction value limit by any sub-user transaction value limit remaining in the sub-user memory means (207, 224; 512) upon the expiration of the term, and reduces the sub-user transaction value limit to zero.

**12.** Circuitry of claim 8, characterized by a multi-user card (301) including the cardholder and programmable memory means (207, 210, 224), the programming means (201, 206) and the authenticity checking means (208, 209, 211), and a multi-user card envelope (401) carrying at least the input means (102) and the display means (103), the multi-user card (301) and the multi-user card envelope (401) having contacts (303; 219, 220; 802, 803) which are connectable to each other at a contact position of the card (301) in the envelope (401) for establishing a communication between the display means (103) and the input means (102) on the one hand and the programming and authenticity checking means on the other hand.

**13.** Circuitry of claim 2, characterized in that the mulit-user card envelope (401) includes a power supply source (229).

**14.** Circuitry of claim 12 or 13, characterized in that the card envelope (401) is of the size to receive the card (301) completely therein, the contact position of the card (301) being established with the card (301) being partly withdrawn from the envelope (401).

**15.** Circuitry of claim 8, characterized in that the circuitry includes a portable card (101) including the memory means as well as the programming, input, authenticity checking and display means.

**16.** Circuitry of claim 4, characterized in that the cardholder transaction value limit is in units of a certain value designation and the circuitry includes a value conversion means (201, 205, 208, 213) for changing the selected value of one designation into the value of a selected other designation.

**17.** Circuitry of claim 16, characterized in that the value conversion means (201, 205, 208, 213) converts a selected number of units of an original designation, that the circuitry includes a programmable memory means (227) for storing the number of units of the value of the changed designation after conversion by the value conversion means, that the value conversion means subtracts the selected number of units of the original designation from one of the stored transaction value limits and that the authenticity checking means (208, 209, 211) is adapted to allow access to the value conversion means upon authentication of a personal enabling character.

**18.** Circuitry of claim 16, characterized in that the circuitry includes a menu memory (221) for storing conversion rates for changing a selected value of one designation into the value of a selected other designation and that the value conversion means (201, 205, 208, 213) is operable such that it selects a conversion rate from the menu memory (221) for changing the selected value.

**19.** Circuitry of claim 4, characterized in that the circuitry includes a multi-user card (101) including the cardholder and programmable memory means (207, 210, 224), the programming means (102, 201, 206) and the authenticity checking means (208, 209, 211) which are adapted to be connected during operation to an issuing means (1501) having a memory means (1706) for storing the exchange rates of a plurality of currencies for comparing the unit value of each of them with the value of a visitor's voucher issued by the issuing means (1501) and a storing means (1701, 1702) for storing in the cardholder memory means (210, 224) the transaction value limit corresponding to a calculated number of visitor's vouchers, in turn corresponding to the value of currency received by the issuing means.

**20.** Circuitry of claim 19, characterized in that the issuing means (1501) includes a value receiving means (1510, 1511) for receiving a value in each of the currencies.

**21.** Circuitry of claim 19, characterized in that the issuing means (1501) includes a character selection means (1507) for selecting a unique cardholder personal enabling character and that the programming means (102, 201, 206) stores the selected cardholder personal enabling character in the cardholder memory means (210, 224).

22. Circuitry of claim 1, characterized in that the circuitry includes a card (510) carrying a magnetic stripe (512) containing the programmable sub-user memory means.

23. Circuitry of claim 12, characterized in that the circuitry includes a magnetic stripe (512) on the card (510), which containes the cardholder and programmable memory means, and that the envelope (401) has a slot (502) therein for receiving the card (510) and a read/write head (504, 506) in the slot for reading and writing data from and to the magnetic stripe.

24. Circuitry of any of the claims 1 to 23, characterized in that the card includes a microprocessor having the programmable memory means for receiving data usable for conducting a transaction using the card.

25. Circuitry of any of the claims 12 to 14, characterized in that the envelope (401) includes a window (304), that the card (301) includes a marker on an outer surface thereof, and that the relative position of card (301) and envelope (401), in which there is provided a communication connection between them, is established when the marker is visible in the window (304).

**Revendications**

1. Dispositif de circuit comportant au moins une carte (101; 301; 510) contenant au moins une partie du dispositif, destiné au commerce, à l'identification et/ou à l'actionnement; un moyen de mémoire (210, 224; 512) de propriétaire de la carte, contenu dans la carte (101; 301; 510), pour mémoriser une caractéristique d'autorisation personnelle de propriétaire de carte (PIN); un moyen de mémoire programmable (207, 224; 512) contenu dans la carte (101; 301; 510) pour mémoriser au moins une autre caractéristique d'autorisation; et un moyen de vérification d'authentification (208, 209, 211) en vue de l'authentification d'une caractéristique d'autorisation personnelle comme correspondant à la caractéristique mémorisée d'autorisation personnelle de propriétaire de carte (PIN), caractérisé en ce que le moyen de mémoire programmable (207, 224; 512) comporte un moyen de mémoire d'utilisateur subordonné dans lequel peut être mémorisée au moins une caractéristique personnelle d'authentification d'utilisateur subordonné (UNT-PIN), en ce qu'il est prévu un moyen de programmation (102, 201, 206) pour programmer le moyen de mémoire programmable d'utilisateur subordonné à l'aide d'une caractéristique personnelle d'autorisation d'utilisateur subordonné qui ne peut être choisie que par le propriétaire de carte autorisé, en ce que le moyen de programmation (102, 201, 206) peut être lancé à l'aide du moyen de vérification d'authentification (208, 209, 211) lors de l'authentification de la caractéristique personnelle d'autorisation de propriétaire de carte (PIN) et en ce que le moyen de vérification d'authentification (208, 209, 211) met également en oeuvre l'authentification d'une caractéristique personnelle d'autorisation comme correspondant à une caractéristique personnelle d'autorisation d'utilisateur subordonné, qui est mémorisée dans le moyen de mémorisation d'utilisateur subordonné.

2. Dispositif selon la revendication 1 caractérisé en ce qu il est prévu un élément d'actionnement (106) dont l'actionnement avant l'authentification mise en oeuvre par le moyen de vérification de l'authentification (208, 209, 211), déclenche exclusivement le lancement du moyen de programmation (101, 201, 206).

3. Dispositif selon la revendication 1, caractérisé en ce que le moyen de mémoire programmable (207, 224; 512) d'utilisateur subordonné peut mémoriser une limite d'utilisation d'utilisateur subordonné, en ce que le moyen de programmation (102, 201, 206) est également constitué de façon à programmer le moyen de mémoire programmable d'utilisateur subordonné à l'aide d'une limite choisie d'utilisation d'utilisateur subordonné, en ce que le moyen de vérification d'authentification (208, 209, 211) autorise, lors de l'authentification d'une caractéristique personnelle d'autorisation comme correspondant à la caractéristique personnelle mémorisée d'autorisation de propriétaire de carte, l'accès au moyen de programmation (101, 201, 106), pour programmer le moyen de mémorisation d'utilisateur subordonné à l'aide d'une limite d'utilisation d'utilisateur subordonné, et en ce que le moyen de vérification de l'authentification, lors de l'authentification d'une caractéristique personnelle d'autorisation comme correspondant à une caractéristique d'autorisation d'utilisateur subordonné, qui est mémorisée dans le moyen de mémoire d'utilisateur subordonné, autorise l'accès au moyen de mémoire d'utilisateur subordonné pour exécuter des activités à l'intérieur de la limite d'utilisation d'utilisateur subordonné mémorisée dans le moyen de mémoire d'utilisateur subordonné (207, 224; 512).

4. Dispositif selon la revendication 1, caractérisé en ce que le moyen de mémoire de propriétaire de carte (210, 224; 512) peut mémoriser une valeur limite de transaction de propriétaire de carte, en ce que le moyen de mémoire d'utilisateur subordonné peut mémoriser une valeur limite de transaction d'utilisateur subordonné, en ce que le dispositif comporte un moyen de transaction (208, 214) pour exécuter des transactions qui provoquent la modification de l'une des deux limites des valeurs de transaction, soit de propriétaire de carte, soit d'utilisateur subordonné, et en ce que le moyen de vérification d'authentification (208, 209, 211) permet, lors de l'authentification d'une caractéristique personnelle d'autorisation comme correspondant à une caractéristique d'autorisation de propriétaire de carte ou de l'utilisateur subordonné, l'accès au moyen de transaction (208, 214) pour exécuter des transactions.

5. Dispositif selon la revendication 1, caractérisé par un moyen d'introduction (102) permettant l'introduction d'une caractéristique d'autorisation de propriétaire de carte et/ou d'utilisateur subordonné.

6. Dispositif selon la revendication 1, caractérisé en ce que les caractéristiques personnelles d'autorisation de propriétaire de carte ou d'utilisateur subordonné comportent une caractéristique personnelle d'identification.

7. Dispositif selon la revendication 1, caractérisé en ce que le moyen de mémoire programmable d'utilisateur subordonné (207, 224; 512) mémorise un délai choisi au préalable qui peut être mémorisé à l'aide des moyens de programmation (101, 201, 106) dans le moyen de mémorisation d'utilisateur conditionné (207, 224; 512) et en ce que le moyen de vérification d'authentification (208, 209, 211) ne met en oeuvre que pendant ce délai une authentification de la caractéristique d'autorisation de l'utilisateur subordonné.

8. Dispositif selon la revendication 5, caractérisé par un dispositif d'affichage (103) destiné à l'affichage d'informations pour faciliter le fonctionnement du moyen de programmation (102, 201, 206) et du moyen de vérification d'authentification (208, 209, 211).

9. Dispositif selon la revendication 7, caractérisé en ce que le moyen de vérification d'authentification (208, 209, 211) efface, après écoulement du délai, la caractéristique d'autorisation d'utilisateur subordonné hors du moyen de mémoire programmable (207, 224; 512) d'utilisateur subordonné.

10. Dispositif selon la revendication 3, caractérisé en ce que le moyen de vérification d'authentification (208, 209, 211) efface automatiquement, lorsqu'est atteinte la limite d'autorisation de l'utilisateur subordonné, la caractéristique personnelle d'autorisation d'utilisateur conditionné hors du moyen de mémoire programmable (207, 224; 512) d'utilisateur subordonné.

11. Dispositif selon la revendication 7, caractérisé en ce que le moyen de mémoire (210, 224; 512) de propriétaire de carte peut mémoriser une valeur limite de transaction de propriétaire de carte, en ce que le moyen de mémoire d'utilisateur subordonné peut mémoriser une valeur limite de transaction d'utilisateur subordonné, en ce que le dispositif comporte un moyen de transaction (201, 204, 208) destiné à l'exécution de transactions qui provoquent une modification de la valeur limite de transaction de propriétaire de carte et/ou d'utilisateur subordonné, en ce que le moyen de vérification d'authentification (208, 209, 211) autorise, lors de l'authentification d'une caractéristique personnelle d'autorisation comme correspondant à la caractéristique d'autorisation de propriétaire de carte ou d'utilisateur subordonné, l'accès au moyen de transaction (201, 204, 208) pour exécuter des transactions, en ce que le moyen de programmation (102, 201, 206) réduit du montant de la limite de valeur de transaction d'utilisateur subordonné la limite de valeur de transaction de propriétaire de carte lorsque la limite de valeur de transaction d'utilisateur subordonné est introduite dans le programme du moyen de mémorisation programmable (207, 224; 512) d'utilisateur subordonné, et en ce que le moyen de vérification d'authentification (208, 209, 211) augmente, d'une limite de valeur de transaction d'utilisateur subordonné qui est restée dans le moyen de mémoire (207, 224; 512) d'utilisateur subordonné lors de l'écoulement du délai, la limite de valeur de transaction de propriétaire de carte et réduit à zéro la limite de valeur de transaction d'utilisateur subordonné.

12. Dispositif selon la revendication 8, caractérisé par une carte à utilisateurs multiples (301) qui comporte le moyen de mémoire programmable et de propriétaire de carte (207, 210, 224), le moyen de programmation (201, 206) et le moyen de vérification d'authentification (208, 209, 211) et par un boîtier (401) de cartes à utilisateurs multiples qui comprend au moins le moyen d'introduction (102) et le moyen d'affichage (103), la carte (301) d'utilisateurs multiples et le boîtier (401) de cartes d'utilisateurs multiples comportant des contacts (303; 219, 220; 802, 803) qui peuvent être reliés entre eux dans une position de contact de la carte (301) dans le boîtier (401) pour mettre en oeuvre une communication entre le moyen d'affichage (103) et le moyen d'entrée (102) d'une part et les moyens de programmation et de vérification d'authentification d'autre part.

**13.** Dispositif selon la revendication 12, caractérisé en ce que le boîtier (401) de cartes à utilisateurs multiples comporte une source (229) d'alimentation en courant.

**14.** Dispositif selon la revendication 12 ou 13, caractérisé en ce que les dimensions du boîtier (401) de cartes sont choisies de telle manière que la carte (301) peut y être totalement reçue et en ce que la position de contact de la carte (301) est atteinte lorsqu'une carte (301) est partiellement retirée hors du boîtier (401).

**15.** Dispositif selon la revendication 8, caractérisé en ce que le dispositif comporte une carte portable (101) comportant le moyen de mémorisation ainsi que les moyens de programmation, d'introduction, de vérification d'authentification et d'affichage.

**16.** Dispositif selon la revendication 4, caractérisé en ce que la valeur de limite de transaction de propriétaire de carte se compose d'unités d'une désignation définie de valeur, et en ce que le dispositif comporte un moyen (201, 205, 208, 213) de conversion de valeur pour modifier en la valeur d'une autre désignation choisie la valeur choisie d'une désignation.

**17.** Dispositif selon la revendication 16, caractérisé en ce qu'un nombre choisi d'unités d'une désignation d'origine peut être converti au moyen du dispositif (201, 205, 213) de conversion de valeur, en ce que le dispositif comporte un moyen de mémoire programmable (227) pour mémoriser le nombre d'unités de la valeur de la désignation modifiée après conversion à l'aide du moyen de conversion de valeur, en ce que le nombre choisi d'unités de la désignation d'origine peut être soustrait, à l'aide du moyen de conversion de valeur, de l'une des limites de transaction mémorisées, et en ce que l'accès au moyen de conversion de valeur peut être protégé, lors de l'authentification de l'une des caractéristiques personnelles d'autorisation, à l'aide du moyen de vérification d'authentification (208, 209, 211).

**18.** Dispositif selon la revendication 16, caractérisé en ce que le dispositif comporte une mémoire (221) de menu pour mémoriser des facteurs de conversion pour transformer en la valeur d'une autre désignation choisie une valeur choisie d'une désignation et en ce que le moyen (201, 205, 208, 213) de conversion de valeur peut être actionné de telle manière qu'il choisit un facteur de conversion dans la mémoire (221) de menu pour modifier la valeur choisie.

**19.** Dispositif selon la revendication 4, caractérisé en ce que le dispositif comporte une carte (101) à utilisateurs multiples, comportant le moyen de mémorisation de propriétaire de carte et le moyen de mémorisation programmable (207, 210, 224), le moyen de programmation (102, 201, 206) et le moyen de vérification d'authentification (208, 209, 211), qui peuvent être reliés de façon fonctionnelle à un dispositif de sortie (1501) qui comporte, dans le moyen de mémoire (210, 224) de propriétaire de carte, un moyen de mémoire (1706) pour mémoriser des cours de change de plusieurs devises pour comparer la valeur unitaire de chacun d'eux à la valeur d'un bon de visiteur qui peut être émis à l'aide du dispositif de sortie (1501) et un moyen de mémorisation (1701, 1702) pour mémoriser la limite de valeur de transaction qui correspond à un nombre calculé de bons de visiteurs qui correspond lui-même à une valeur de devise reçue par le dispositif de sortie.

**20.** Dispositif selon la revendication 19, caractérisé en ce que le dispositif de sortie (1501) comporte un moyen de réception de valeur (1510, 1511) pour recevoir une valeur dans chacune des devises.

**21.** Dispositif selon la revendication 19, caractérisé en ce que le dispositif de sortie (1501) comporte un moyen (1507) de choix de caractéristiques pour choisir une caractéristique personnelle singulière d'autorisation de propriétaire de carte et en ce que le moyen de programmation (102, 201, 206) mémorise dans le moyen de mémoire (210, 224) de propriétaire de carte la caractéristique choisie d'autorisation de propriétaire de carte.

**22.** Dispositif selon la revendication 1, caractérisé en ce que le dispositif comporte une carte (510) à bandes magnétiques (512) qui comporte le moyen de mémorisation programmable d'utilisateur subordonné.

**23.** Dispositif selon la revendication 12, caractérisé en ce que le dispositif comporte, sur la carte (510), une bande magnétique (512) qui comprend le moyen de mémoire de propriétaire de carte et le moyen de mémoire programmable, et en ce que le boîtier (401) comporte une fente (502) pour recevoir la carte (510) et, dans la fente, une tête (504, 506) de lecture/écriture reliée au boîtier (401) pour lire et inscrire des données sur la bande magnétique ou à partir d'elle.

**24.** Dispositif selon l'une des revendications 1 à 23, caractérisé en ce que la carte comporte un microprocesseur qui comporte le moyen de mémoire programmable pour recevoir des données qui peuvent être utilisées pour l'exécution d'une transaction à l'aide de la carte.

**25.** Dispositif selon l'une des revendications 12 à 14, caractérisé en ce que le boîtier (401) comporte une fenêtre (304), en ce que la carte (301) comporte un marquage (403) sur son côté extérieur et en ce que la position relative de la carte (301) et du boîtier (401), dans laquelle elles sont en liaison de communication entre elles, est atteinte lorsque le marquage est visible dans la fenêtre (304).

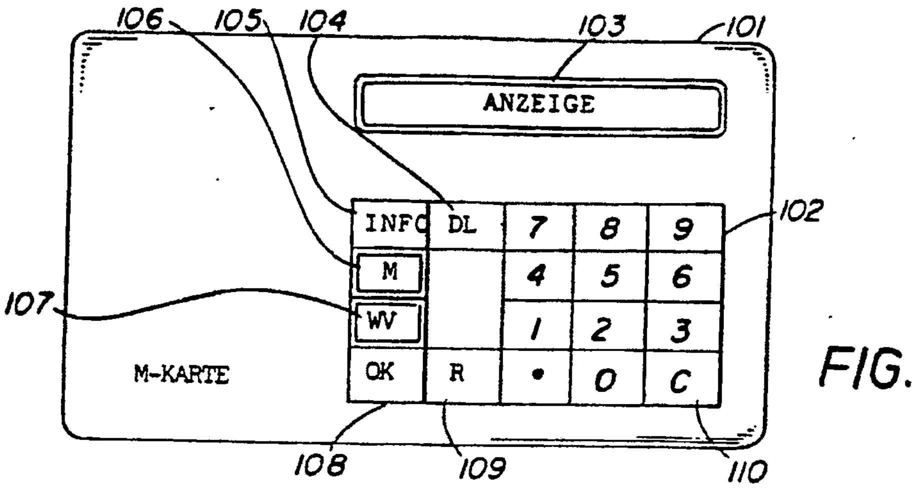


FIG.1

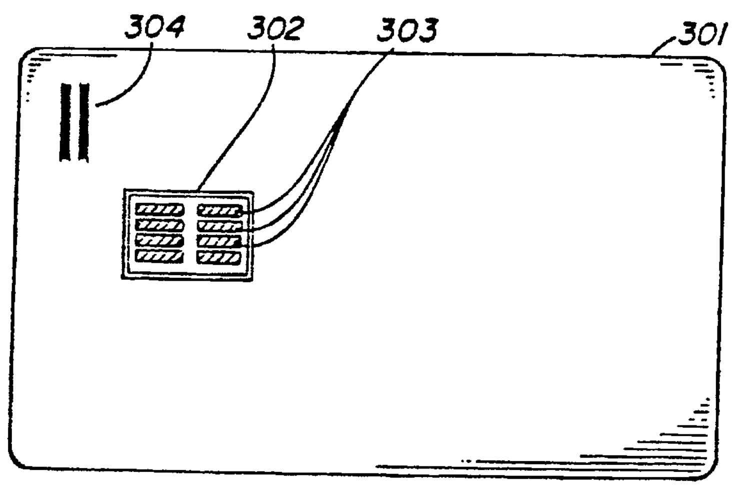


FIG.3

FIG.4a

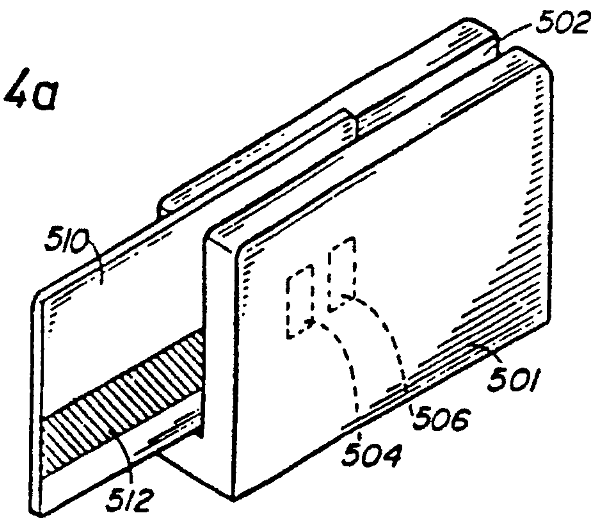

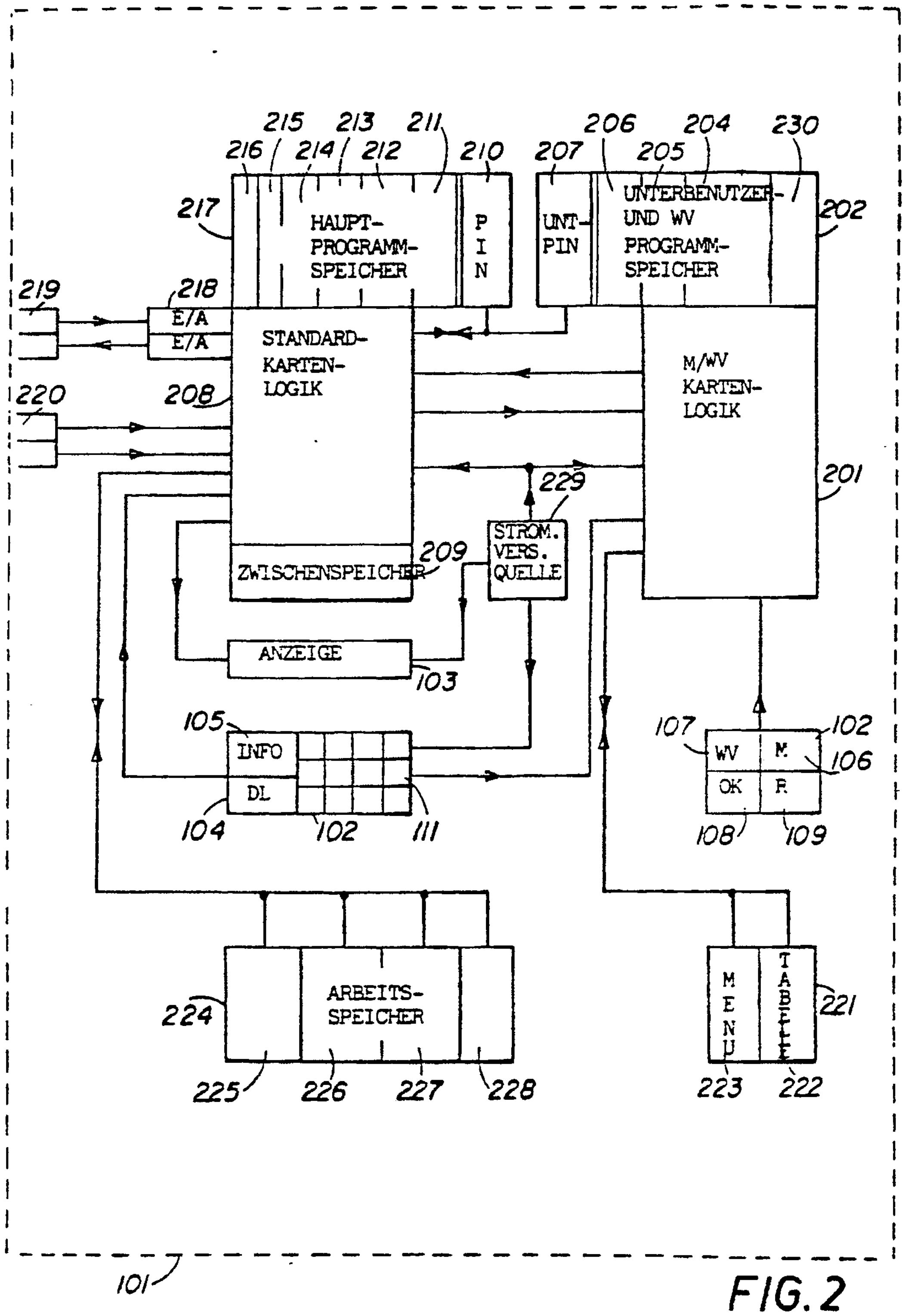
215 213 211
216 214 212 210
207 206 204 205 230
217
HAUPT-
PROGRAMM-
SPEICHER
P
I
N
UNT-
PIN
UNTERBENUTZER-
UND WV
PROGRAMM-
SPEICHER
202
219
218
E/A
E/A
STANDARD-
KARTEN-
LOGIK
M/WV
KARTEN-
LOGIK
220
208
229
201
STROM.
VERS.
QUELLE
ZWISCHENSPEICHER
209
ANZEIGE
103
105
INFO
DL
104
102
111
107
102
106
WV
M
OK
R
108
109
ARBEITS-
SPEICHER
224
225
226
227
228
M
E
N
U
T
A
B
E
L
L
E
221
223
222
101

FIG. 2

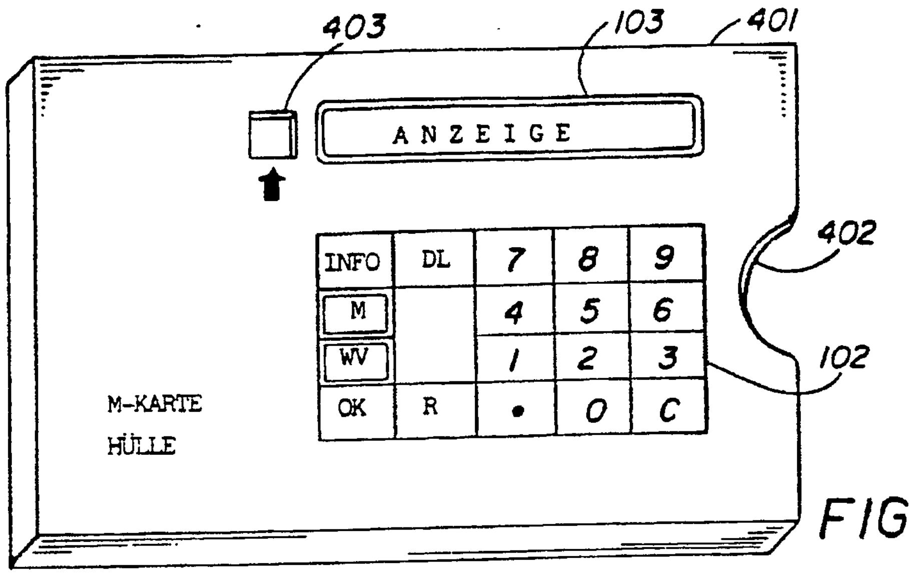
403
103
401
ANZEIGE
402
INFO
DL
7
8
9
M
4
5
6
WV
1
2
3
102
M-KARTE
HÜLLE
OK
R
•
0
C

FIG. 4

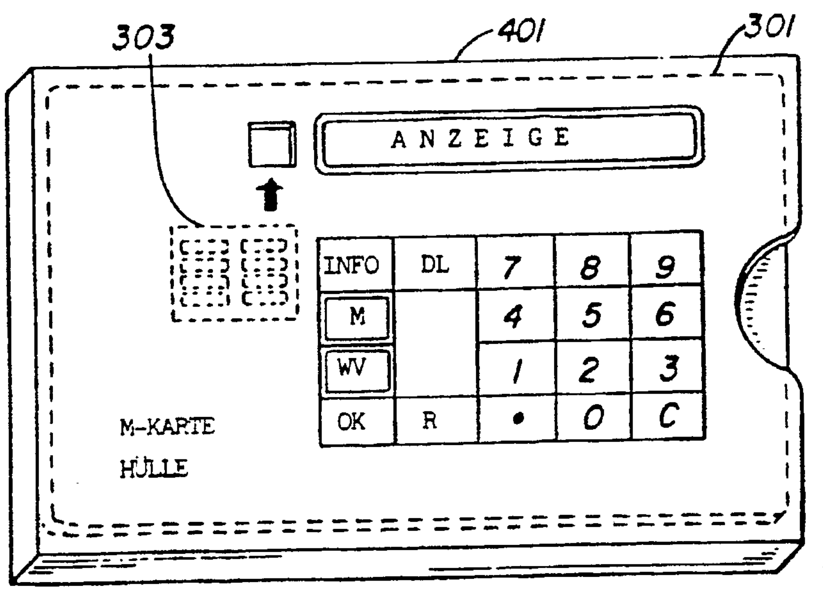
303
401
301
ANZEIGE
INFO
DL
7
8
9
M
4
5
6
WV
1
2
3
M-KARTE
HÜLLE
OK
R
•
0
C

FIG. 5

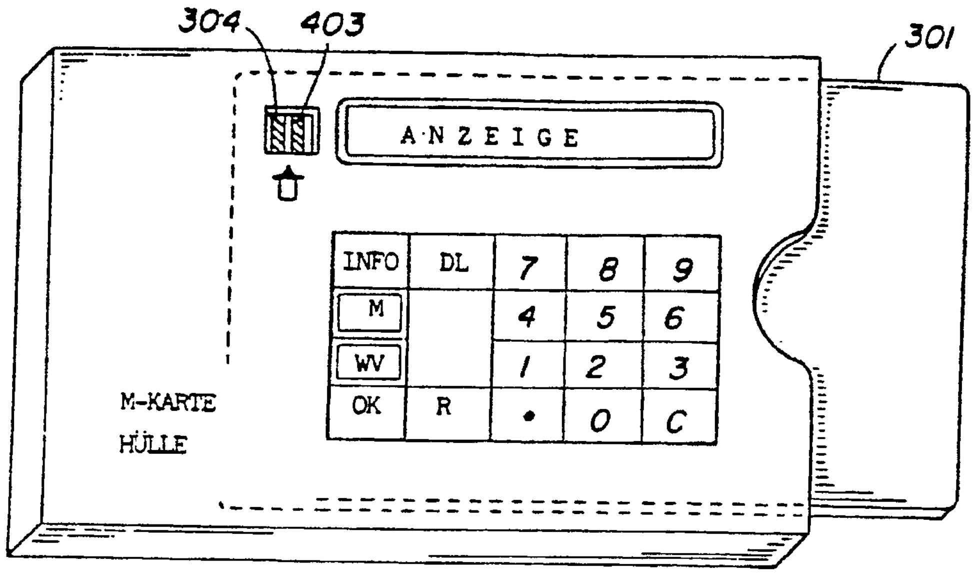
304
403
301
ANZEIGE
INFO
DL
7
8
9
M
4
5
6
WV
1
2
3
OK
R
•
0
C
M-KARTE
HÜLLE

FIG.6

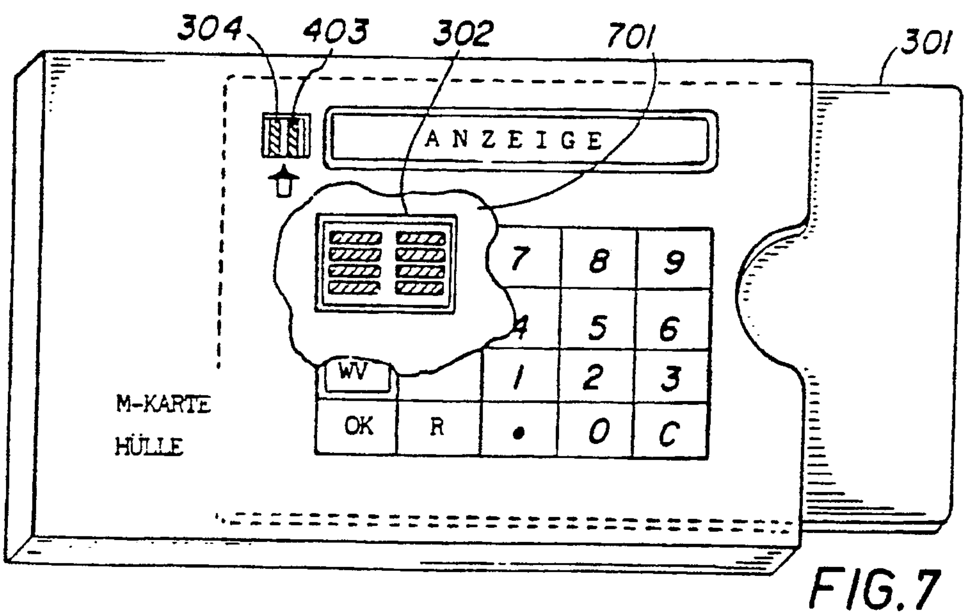
304
403
302
701
301
ANZEIGE
7
8
9
4
5
6
WV
1
2
3
OK
R
•
0
C
M-KARTE
HÜLLE

FIG.7

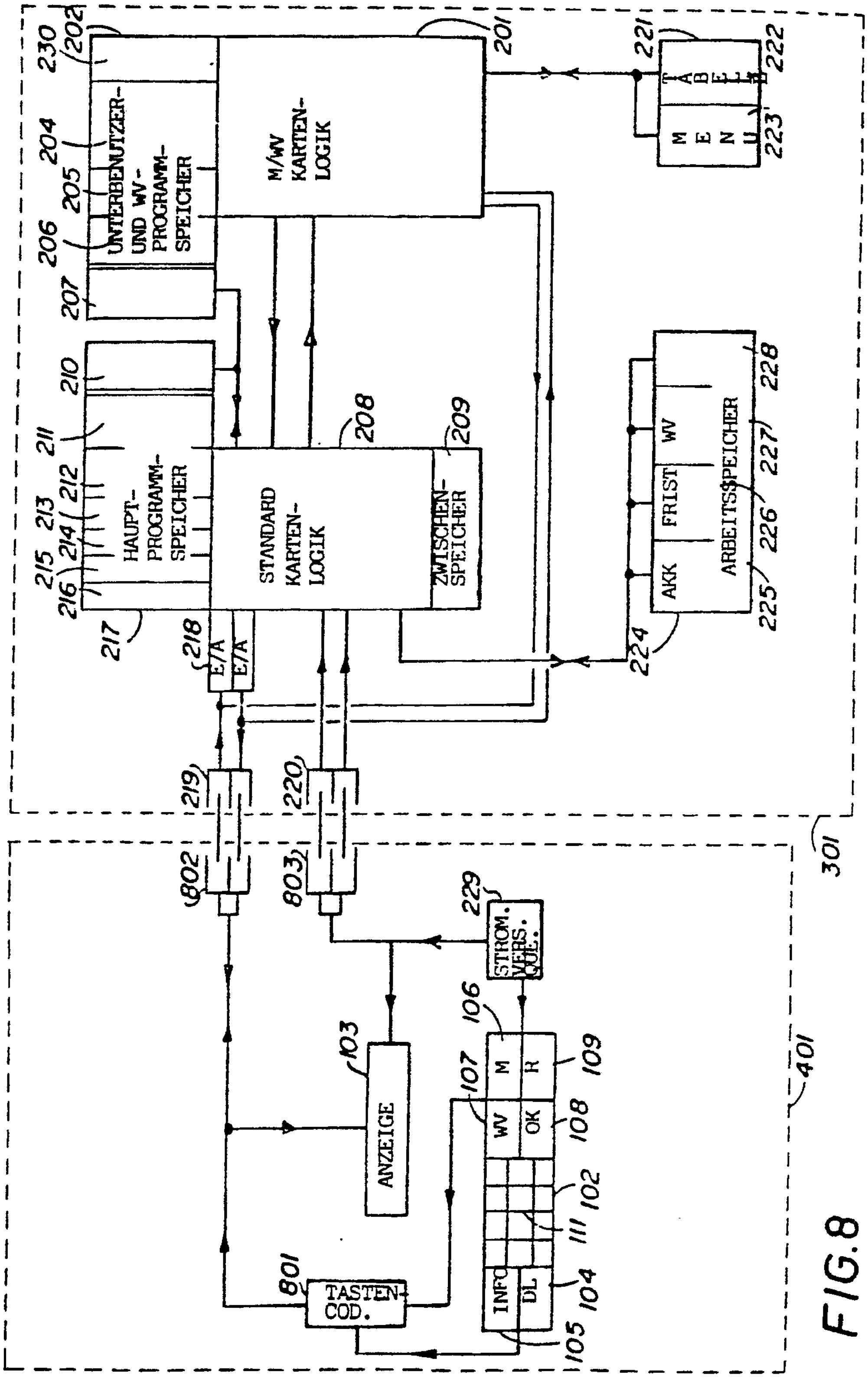
UNTERBENUTZER- UND WV-PROGRAMM-SPEICHER
M/WV KARTEN-LOGIK
TABELLE
MENU
HAUPT-PROGRAMM-SPEICHER
STANDARD KARTEN-LOGIK
ZWISCHEN-SPEICHER
AKK
FRIST
WV
ARBEITSSPEICHER
E/A
E/A
STROM. VERS. QUL.
ANZEIGE
TASTEN-COD.
INFO
DL
WV
OK
M
R
201
202
204
205
206
207
208
209
210
211
212
213
214
215
216
217
218
219
220
221
222
223'
224
225
226
227
228
229
230
301
401
801
802
803
102
103
104
105
106
107
108
109
111

FIG.8

FIG. 9

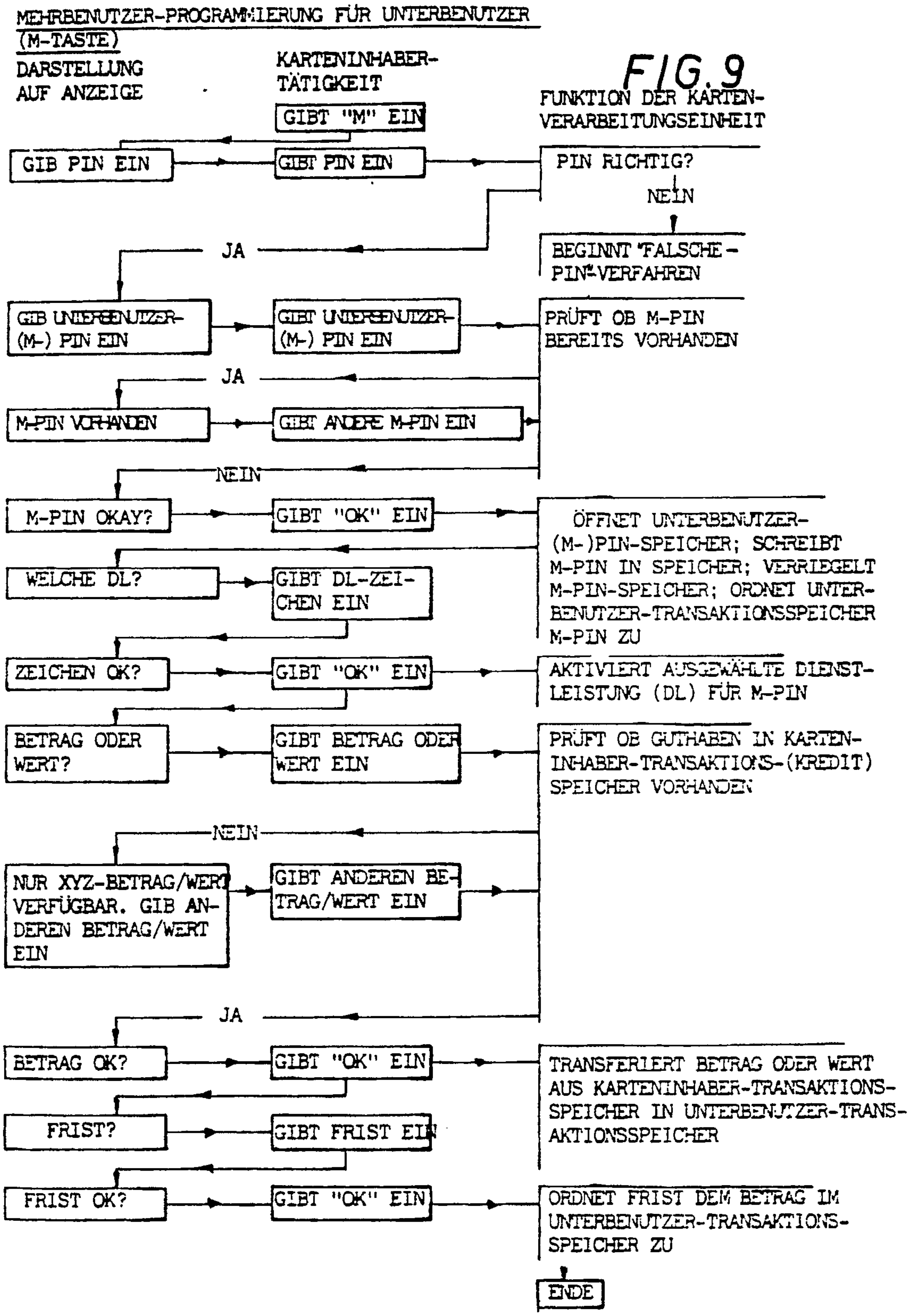
MEHRBENUTZER-PROGRAMMIERUNG FÜR UNTERBENUTZER (M-TASTE)
DARSTELLUNG AUF ANZEIGE
KARTENINHABER-TÄTIGKEIT
FUNKTION DER KARTENVERARBEITUNGSEINHEIT
GIBT "M" EIN
GIB PIN EIN
GIBT PIN EIN
PIN RICHTIG?
NEIN
BEGINNT "FALSCHE-PIN"-VERFAHREN
JA
GIB UNTERBENUTZER-(M-) PIN EIN
GIBT UNTERBENUTZER-(M-) PIN EIN
PRÜFT OB M-PIN BEREITS VORHANDEN
JA
M-PIN VORHANDEN
GIBT ANDERE M-PIN EIN
NEIN
M-PIN OKAY?
GIBT "OK" EIN
ÖFFNET UNTERBENUTZER-(M-)PIN-SPEICHER; SCHREIBT M-PIN IN SPEICHER; VERRIEGELT M-PIN-SPEICHER; ORDNET UNTERBENUTZER-TRANSAKTIONSSPEICHER M-PIN ZU
WELCHE DL?
GIBT DL-ZEICHEN EIN
ZEICHEN OK?
GIBT "OK" EIN
AKTIVIERT AUSGEWÄHLTE DIENSTLEISTUNG (DL) FÜR M-PIN
BETRAG ODER WERT?
GIBT BETRAG ODER WERT EIN
PRÜFT OB GUTHABEN IN KARTENINHABER-TRANSAKTIONS-(KREDIT) SPEICHER VORHANDEN
NEIN
NUR XYZ-BETRAG/WERT VERFÜGBAR. GIB ANDEREN BETRAG/WERT EIN
GIBT ANDEREN BETRAG/WERT EIN
JA
BETRAG OK?
GIBT "OK" EIN
TRANSFERIERT BETRAG ODER WERT AUS KARTENINHABER-TRANSAKTIONSSPEICHER IN UNTERBENUTZER-TRANSAKTIONSSPEICHER
FRIST?
GIBT FRIST EIN
FRIST OK?
GIBT "OK" EIN
ORDNET FRIST DEM BETRAG IM UNTERBENUTZER-TRANSAKTIONSSPEICHER ZU
ENDE

FIG.10

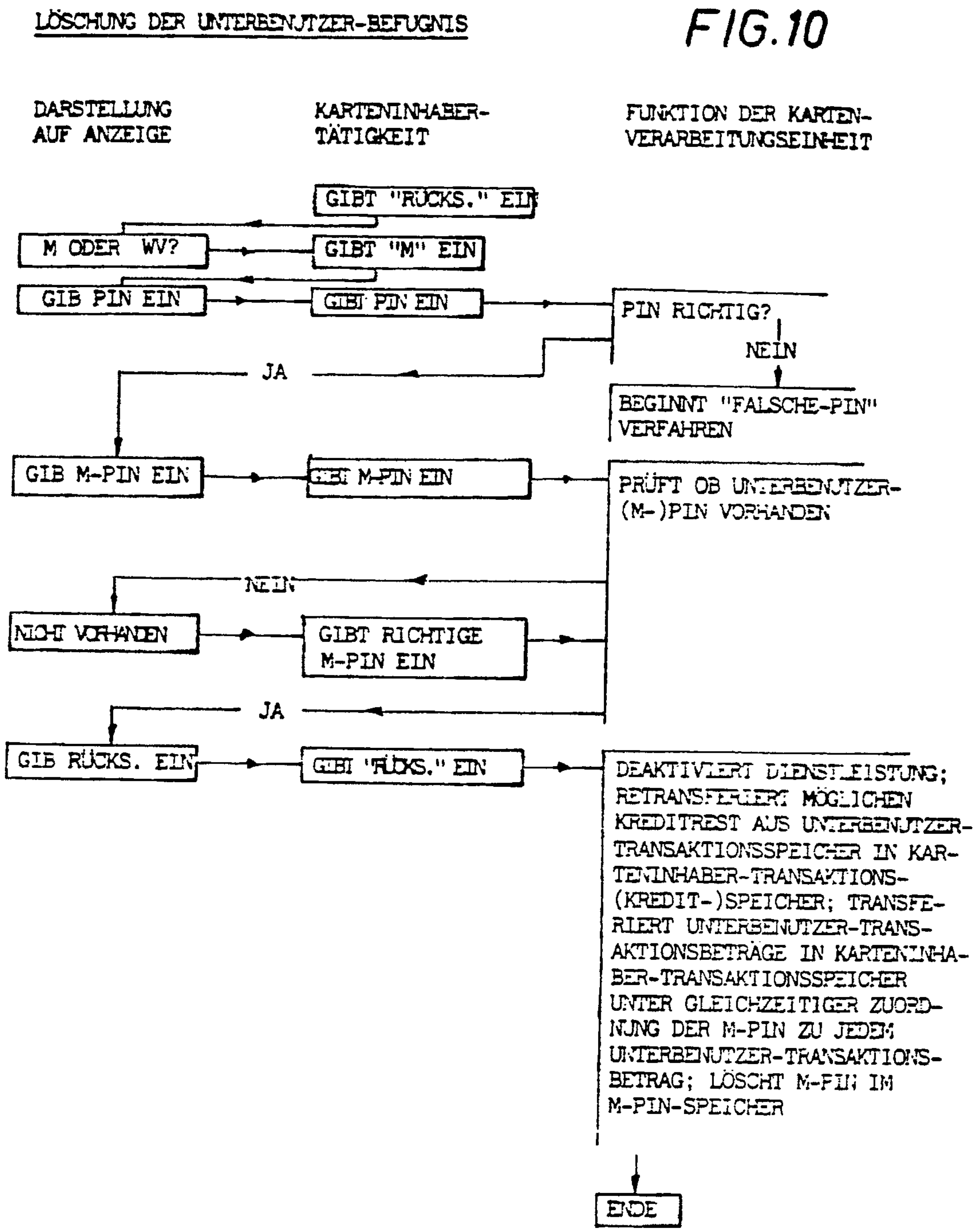
LÖSCHUNG DER UNTERBENUTZER-BEFUGNIS
DARSTELLUNG AUF ANZEIGE
KARTENINHABER-TÄTIGKEIT
FUNKTION DER KARTEN-VERARBEITUNGSEINHEIT
GIBT "RÜCKS." EIN
M ODER WV?
GIBT "M" EIN
GIB PIN EIN
GIBT PIN EIN
PIN RICHTIG?
NEIN
JA
BEGINNT "FALSCHE-PIN" VERFAHREN
GIB M-PIN EIN
GIBT M-PIN EIN
PRÜFT OB UNTERBENUTZER-(M-)PIN VORHANDEN
NEIN
NICHT VORHANDEN
GIBT RICHTIGE M-PIN EIN
JA
GIB RÜCKS. EIN
GIBT "RÜCKS." EIN
DEAKTIVIERT DIENSTLEISTUNG; RETRANSFERIERT MÖGLICHEN KREDITREST AUS UNTERBENUTZER-TRANSAKTIONSSPEICHER IN KARTENINHABER-TRANSAKTIONS-(KREDIT-)SPEICHER; TRANSFERIERT UNTERBENUTZER-TRANSAKTIONSBETRÄGE IN KARTENINHABER-TRANSAKTIONSSPEICHER UNTER GLEICHZEITIGER ZUORDNUNG DER M-PIN ZU JEDEM UNTERBENUTZER-TRANSAKTIONSBETRAG; LÖSCHT M-PIN IM M-PIN-SPEICHER
ENDE

FIG. 11

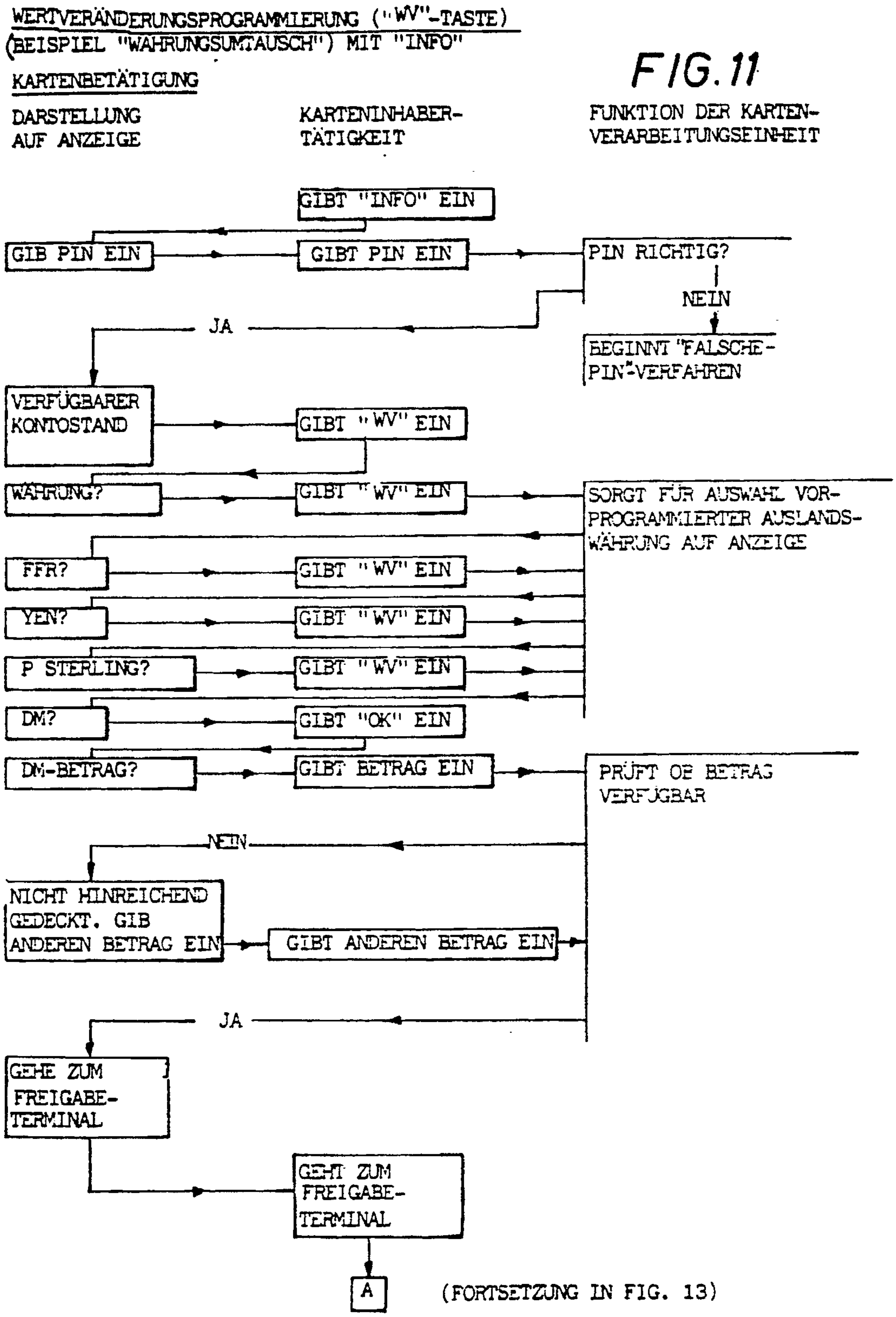
WERTVERÄNDERUNGSPROGRAMMIERUNG ("WV"-TASTE)
(BEISPIEL "WÄHRUNGSUMTAUSCH") MIT "INFO"
KARTENBETÄTIGUNG
DARSTELLUNG AUF ANZEIGE
KARTENINHABER-TÄTIGKEIT
FUNKTION DER KARTEN-VERARBEITUNGSEINHEIT
GIBT "INFO" EIN
GIB PIN EIN
GIBT PIN EIN
PIN RICHTIG?
NEIN
BEGINNT "FALSCHE-PIN"-VERFAHREN
JA
VERFÜGBARER KONTOSTAND
GIBT "WV" EIN
WÄHRUNG?
GIBT "WV" EIN
SORGT FÜR AUSWAHL VORPROGRAMMIERTER AUSLANDSWÄHRUNG AUF ANZEIGE
FFR?
GIBT "WV" EIN
YEN?
GIBT "WV" EIN
P STERLING?
GIBT "WV" EIN
DM?
GIBT "OK" EIN
DM-BETRAG?
GIBT BETRAG EIN
PRÜFT OB BETRAG VERFÜGBAR
NEIN
NICHT HINREICHEND GEDECKT. GIB ANDEREN BETRAG EIN
GIBT ANDEREN BETRAG EIN
JA
GEHE ZUM FREIGABE-TERMINAL
GEHT ZUM FREIGABE-TERMINAL
A
(FORTSETZUNG IN FIG. 13)

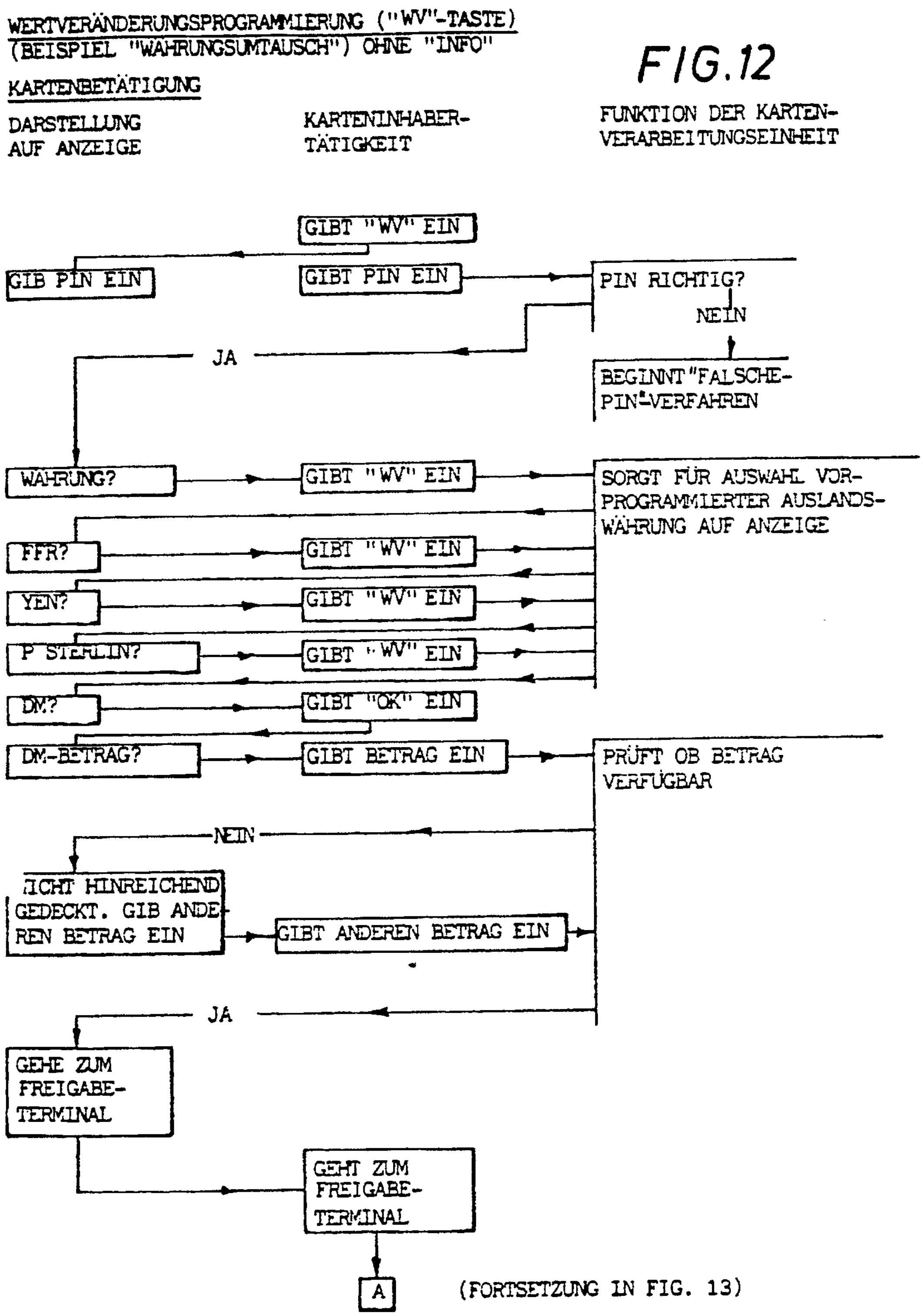
WERTVERÄNDERUNGSPROGRAMMIERUNG ("WV"-TASTE)
(BEISPIEL "WÄHRUNGSUMTAUSCH") OHNE "INFO"
KARTENBETÄTIGUNG
DARSTELLUNG AUF ANZEIGE
KARTENINHABER-TÄTIGKEIT
FUNKTION DER KARTEN-VERARBEITUNGSEINHEIT
GIBT "WV" EIN
GIB PIN EIN
GIBT PIN EIN
PIN RICHTIG?
NEIN
JA
BEGINNT "FALSCHE-PIN"-VERFAHREN
WÄHRUNG?
GIBT "WV" EIN
SORGT FÜR AUSWAHL VORPROGRAMMIERTER AUSLANDSWÄHRUNG AUF ANZEIGE
FFR?
GIBT "WV" EIN
YEN?
GIBT "WV" EIN
P STERLIN?
GIBT "WV" EIN
DM?
GIBT "OK" EIN
DM-BETRAG?
GIBT BETRAG EIN
PRÜFT OB BETRAG VERFÜGBAR
NEIN
NICHT HINREICHEND GEDECKT. GIB ANDEREN BETRAG EIN
GIBT ANDEREN BETRAG EIN
JA
GEHE ZUM FREIGABE-TERMINAL
GEHT ZUM FREIGABE-TERMINAL
A
(FORTSETZUNG IN FIG. 13)

FIG.12

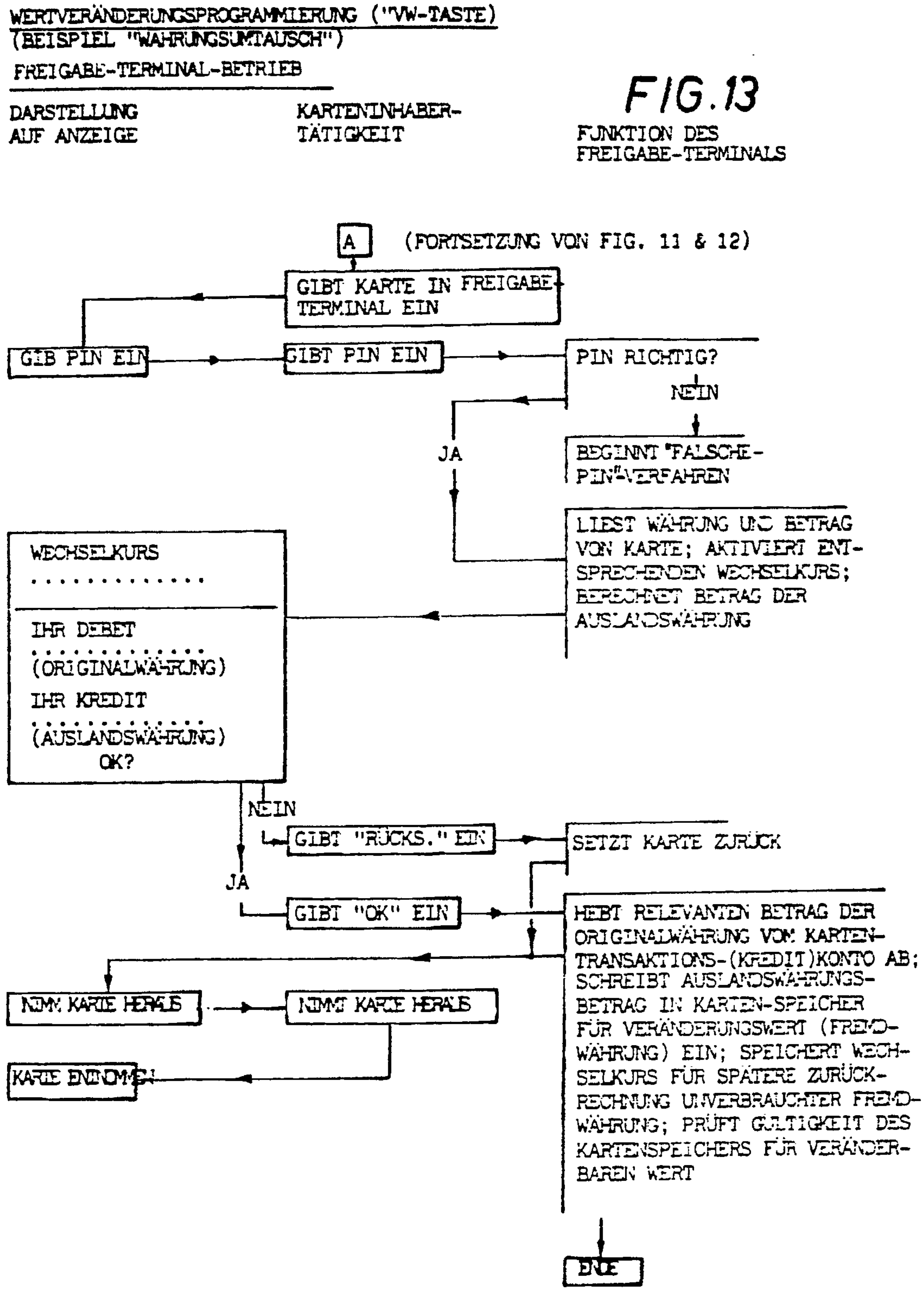
WERTVERÄNDERUNGSPROGRAMMIERUNG ("VW-TASTE)
(BEISPIEL "WÄHRUNGSUMTAUSCH")
FREIGABE-TERMINAL-BETRIEB
DARSTELLUNG AUF ANZEIGE
KARTENINHABER-TÄTIGKEIT
FUNKTION DES FREIGABE-TERMINALS
A
(FORTSETZUNG VON FIG. 11 & 12)
GIBT KARTE IN FREIGABE-TERMINAL EIN
GIB PIN EIN
GIBT PIN EIN
PIN RICHTIG?
NEIN
JA
BEGINNT "FALSCHE-PIN"-VERFAHREN
LIEST WÄHRUNG UND BETRAG VON KARTE; AKTIVIERT ENTSPRECHENDEN WECHSELKURS; BERECHNET BETRAG DER AUSLANDSWÄHRUNG
WECHSELKURS .............
IHR DEBET ............. (ORIGINALWÄHRUNG)
IHR KREDIT ............. (AUSLANDSWÄHRUNG)
OK?
NEIN
GIBT "RÜCKS." EIN
SETZT KARTE ZURÜCK
JA
GIBT "OK" EIN
HEBT RELEVANTEN BETRAG DER ORIGINALWÄHRUNG VOM KARTEN-TRANSAKTIONS-(KREDIT)KONTO AB; SCHREIBT AUSLANDSWÄHRUNGS-BETRAG IN KARTEN-SPEICHER FÜR VERÄNDERUNGSWERT (FREMD-WÄHRUNG) EIN; SPEICHERT WECHSELKURS FÜR SPÄTERE ZURÜCK-RECHNUNG UNVERBRAUCHTER FREMD-WÄHRUNG; PRÜFT GÜLTIGKEIT DES KARTENSPEICHERS FÜR VERÄNDER-BAREN WERT
NIMM KARTE HERAUS
NIMMT KARTE HERAUS
KARTE ENTNOMMEN
ENDE

FIG.13

FIG. 14

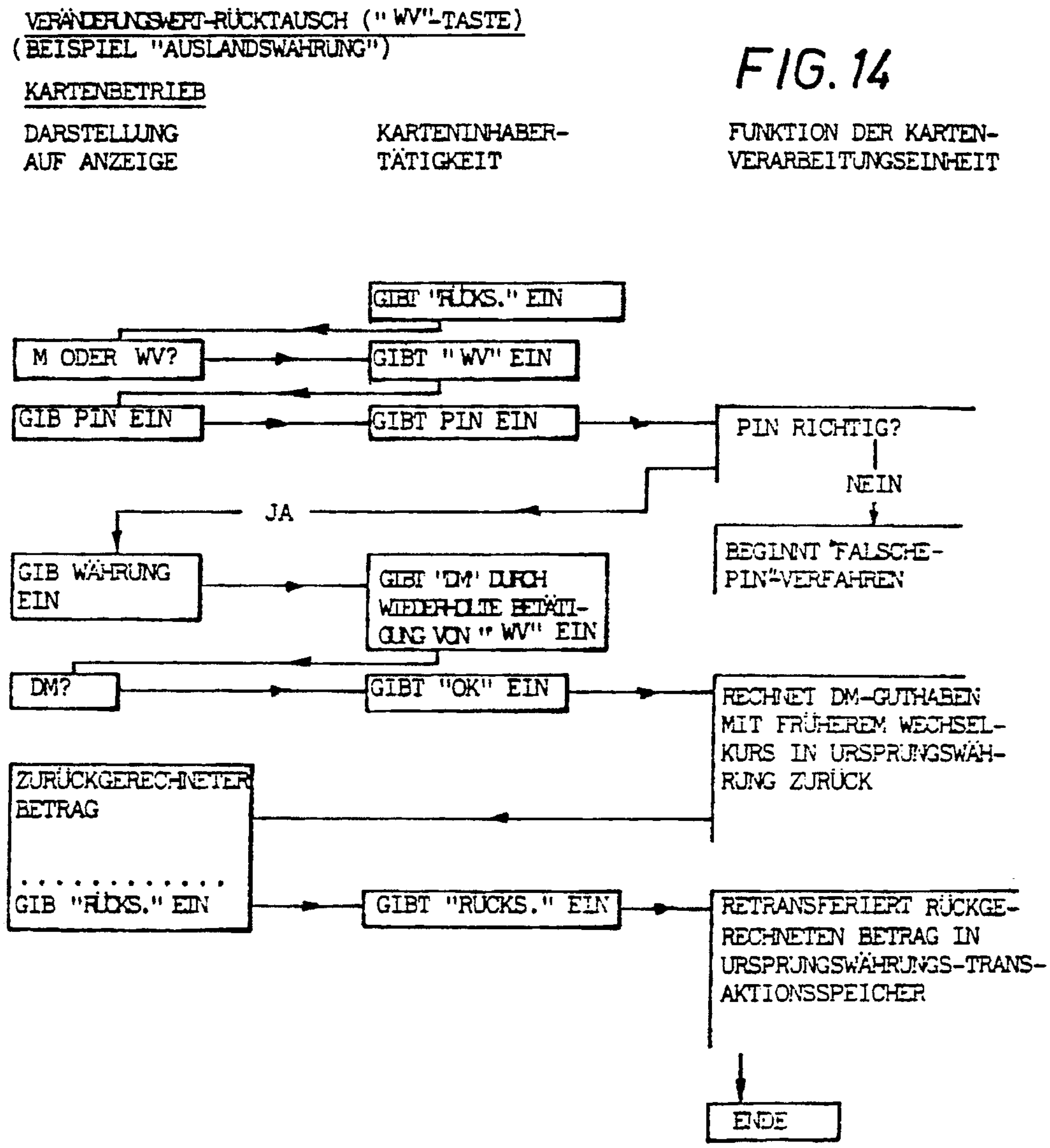
VERÄNDERUNGSWERT-RÜCKTAUSCH ("WV"-TASTE)
(BEISPIEL "AUSLANDSWÄHRUNG")
KARTENBETRIEB
DARSTELLUNG AUF ANZEIGE
KARTENINHABER-TÄTIGKEIT
FUNKTION DER KARTEN-VERARBEITUNGSEINHEIT
GIBT "RÜCKS." EIN
M ODER WV?
GIBT "WV" EIN
GIB PIN EIN
GIBT PIN EIN
PIN RICHTIG?
NEIN
JA
BEGINNT "FALSCHE-PIN"-VERFAHREN
GIB WÄHRUNG EIN
GIBT "DM" DURCH WIEDERHOLTE BETÄTIGUNG VON "WV" EIN
DM?
GIBT "OK" EIN
RECHNET DM-GUTHABEN MIT FRÜHEREM WECHSELKURS IN URSPRUNGSWÄHRUNG ZURÜCK
ZURÜCKGERECHNETER BETRAG
GIB "RÜCKS." EIN
GIBT "RÜCKS." EIN
RETRANSFERIERT RÜCKGERECHNETEN BETRAG IN URSPRUNGSWÄHRUNGS-TRANSAKTIONSSPEICHER
ENDE

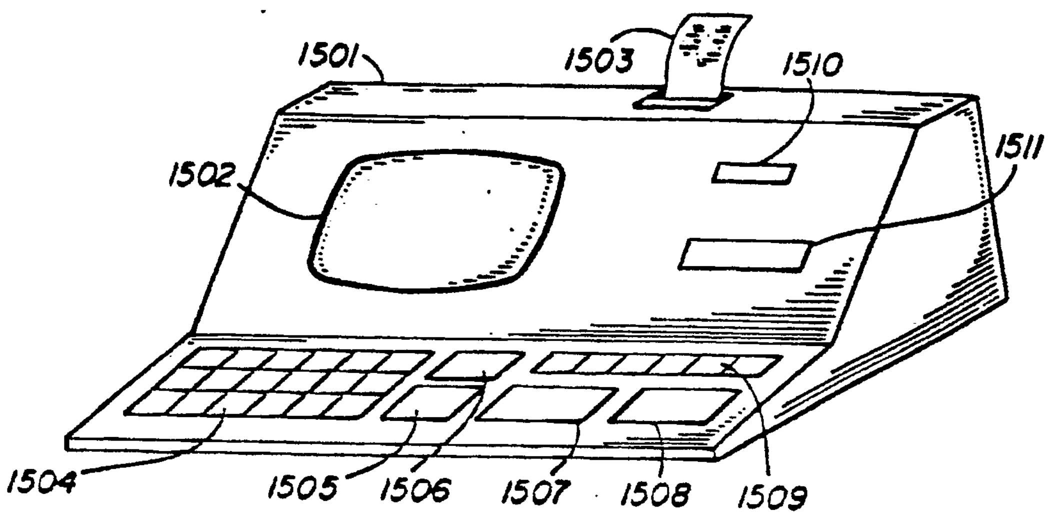
1501
1503
1510
1502
1511
1504
1505
1506
1507
1508
1509

FIG. 15

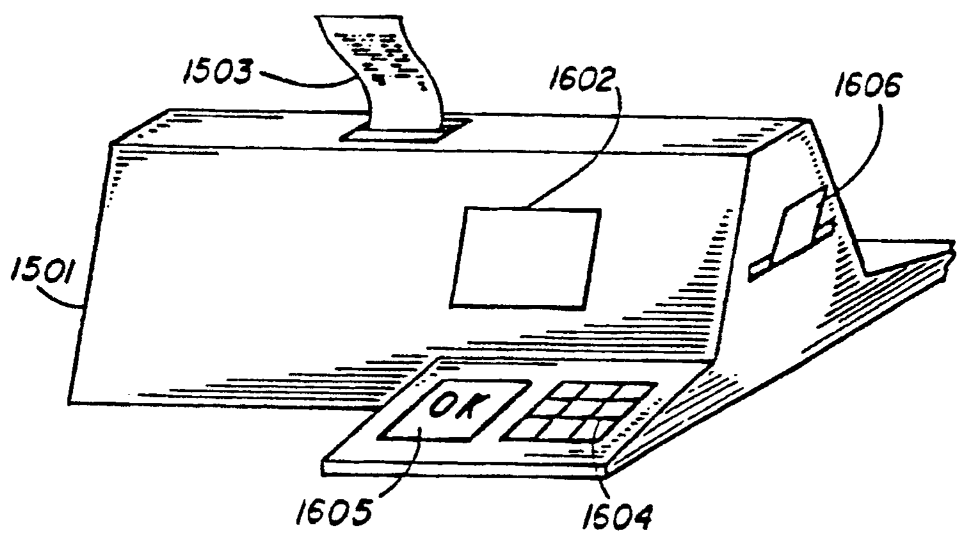
1503
1602
1606
1501
OK
1605
1604

FIG. 16

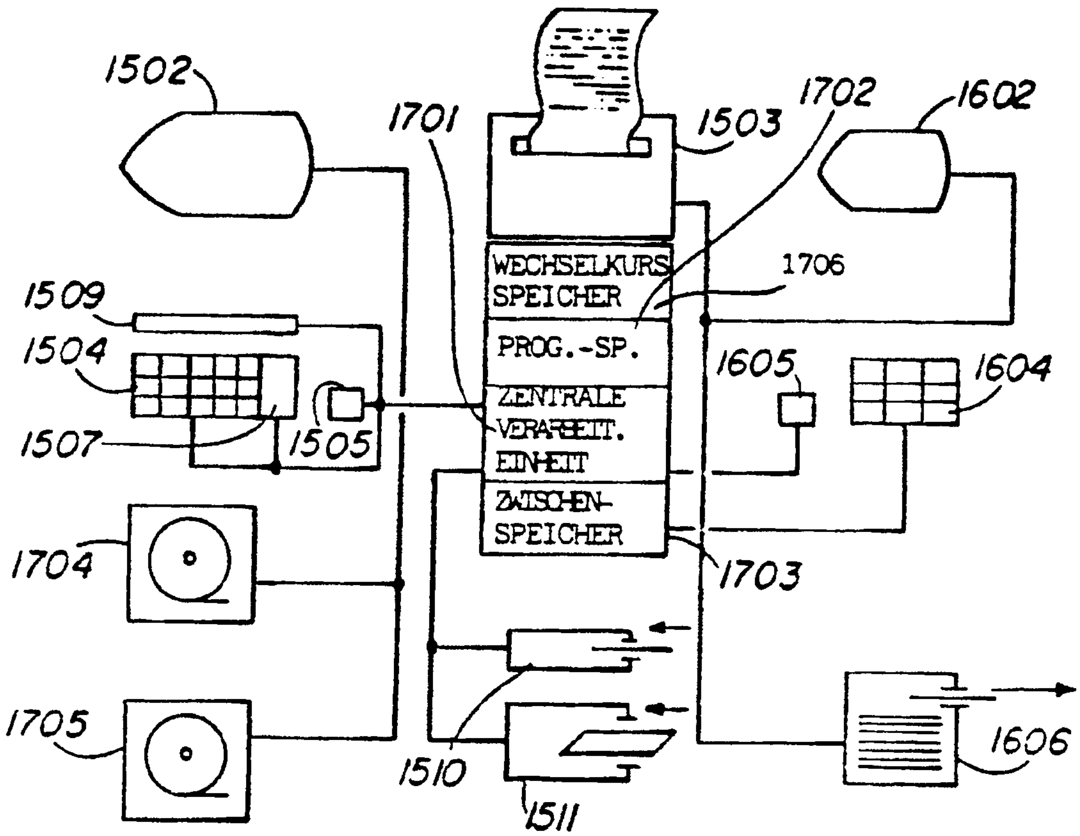
1502
1701
1503
1702
1602
WECHSELKURS SPEICHER
1706
1509
PROG.-SP.
1504
1605
1604
ZENTRALE VERARBEIT. EINHEIT
1507
1505
ZWISCHEN-SPEICHER
1704
1703
1705
1510
1511
1606

FIG. 17

FIG. 18

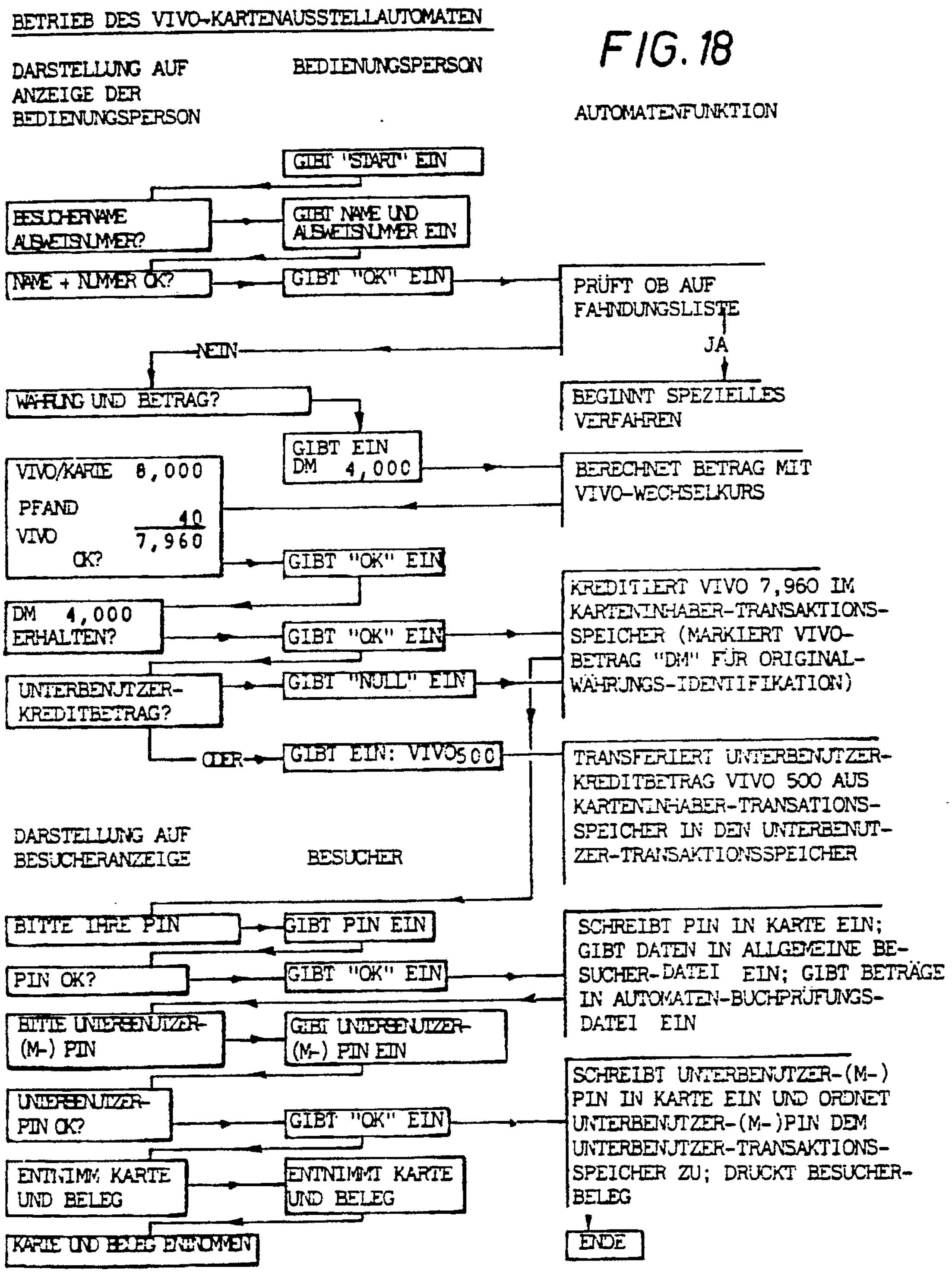
BETRIEB DES VIVO-KARTENAUSSTELLAUTOMATEN
DARSTELLUNG AUF ANZEIGE DER BEDIENUNGSPERSON
BEDIENUNGSPERSON
AUTOMATENFUNKTION
GIBT 'START' EIN
BESUCHERNAME AUSWEISNUMMER?
GIBT NAME UND AUSWEISNUMMER EIN
NAME + NUMMER OK?
GIBT "OK" EIN
PRÜFT OB AUF FAHNDUNGSLISTE
NEIN
JA
BEGINNT SPEZIELLES VERFAHREN
WÄHRUNG UND BETRAG?
GIBT EIN DM 4,000
BERECHNET BETRAG MIT VIVO-WECHSELKURS
VIVO/KARTE 8,000
PFAND 40
VIVO 7,960
OK?
GIBT "OK" EIN
KREDITIERT VIVO 7,960 IM KARTENINHABER-TRANSAKTIONS-SPEICHER (MARKIERT VIVO-BETRAG "DM" FÜR ORIGINAL-WÄHRUNGS-IDENTIFIKATION)
DM 4,000 ERHALTEN?
GIBT "OK" EIN
UNTERBENUTZER-KREDITBETRAG?
GIBT "NULL" EIN
ODER
GIBT EIN: VIVO 500
TRANSFERIERT UNTERBENUTZER-KREDITBETRAG VIVO 500 AUS KARTENINHABER-TRANSAKTIONS-SPEICHER IN DEN UNTERBENUTZER-TRANSAKTIONSSPEICHER
DARSTELLUNG AUF BESUCHERANZEIGE
BESUCHER
BITTE IHRE PIN
GIBT PIN EIN
SCHREIBT PIN IN KARTE EIN; GIBT DATEN IN ALLGEMEINE BESUCHER-DATEI EIN; GIBT BETRÄGE IN AUTOMATEN-BUCHPRÜFUNGS-DATEI EIN
PIN OK?
GIBT "OK" EIN
BITTE UNTERBENUTZER-(M-) PIN
GIBT UNTERBENUTZER-(M-) PIN EIN
SCHREIBT UNTERBENUTZER-(M-) PIN IN KARTE EIN UND ORDNET UNTERBENUTZER-(M-)PIN DEM UNTERBENUTZER-TRANSAKTIONS-SPEICHER ZU; DRUCKT BESUCHER-BELEG
UNTERBENUTZER-PIN OK?
GIBT "OK" EIN
ENTNIMM KARTE UND BELEG
ENTNIMMT KARTE UND BELEG
KARTE UND BELEG ENTNOMMEN
ENDE

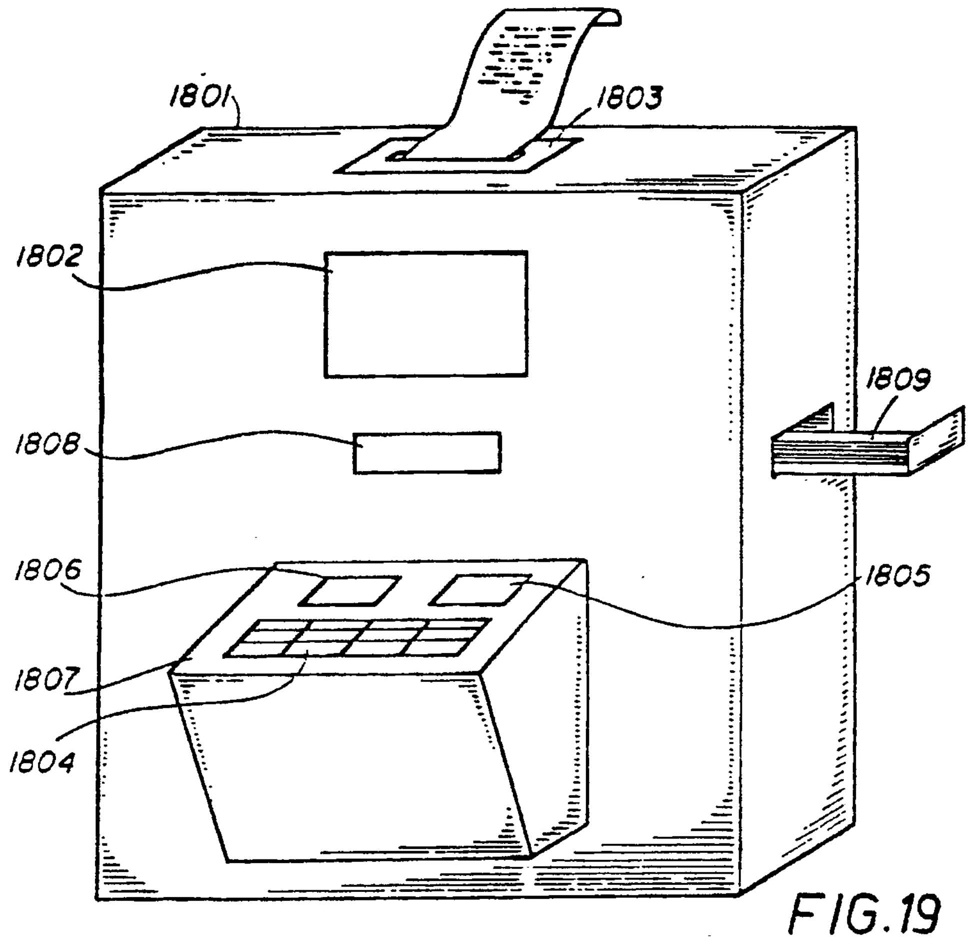
1801
1803
1802
1809
1808
1806
1805
1807
1804

FIG.19

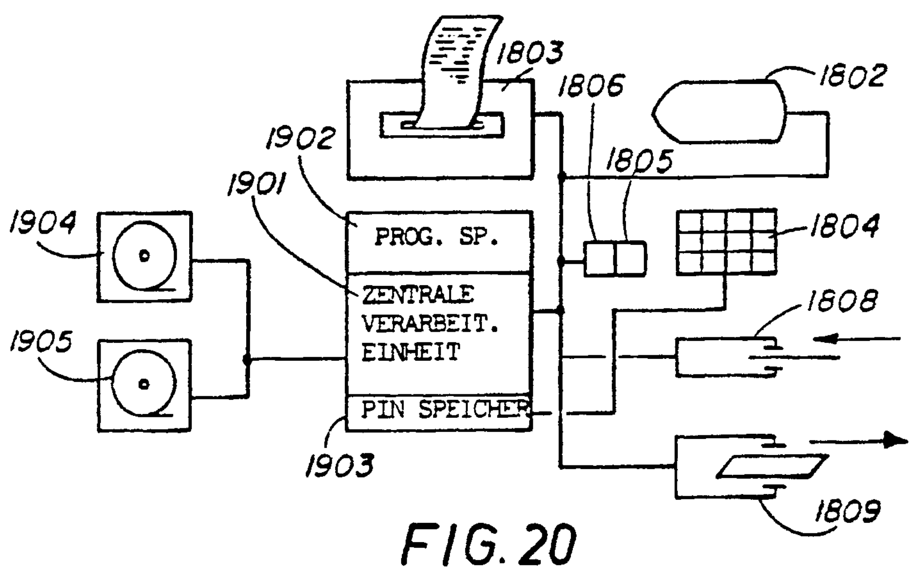
1803
1806
1802
1902
1805
1901
1904
PROG. SP.
1804
ZENTRALE
VERARBEIT.
EINHEIT
1808
1905
PIN SPEICHER
1903
1809

FIG. 20

FIG. 21

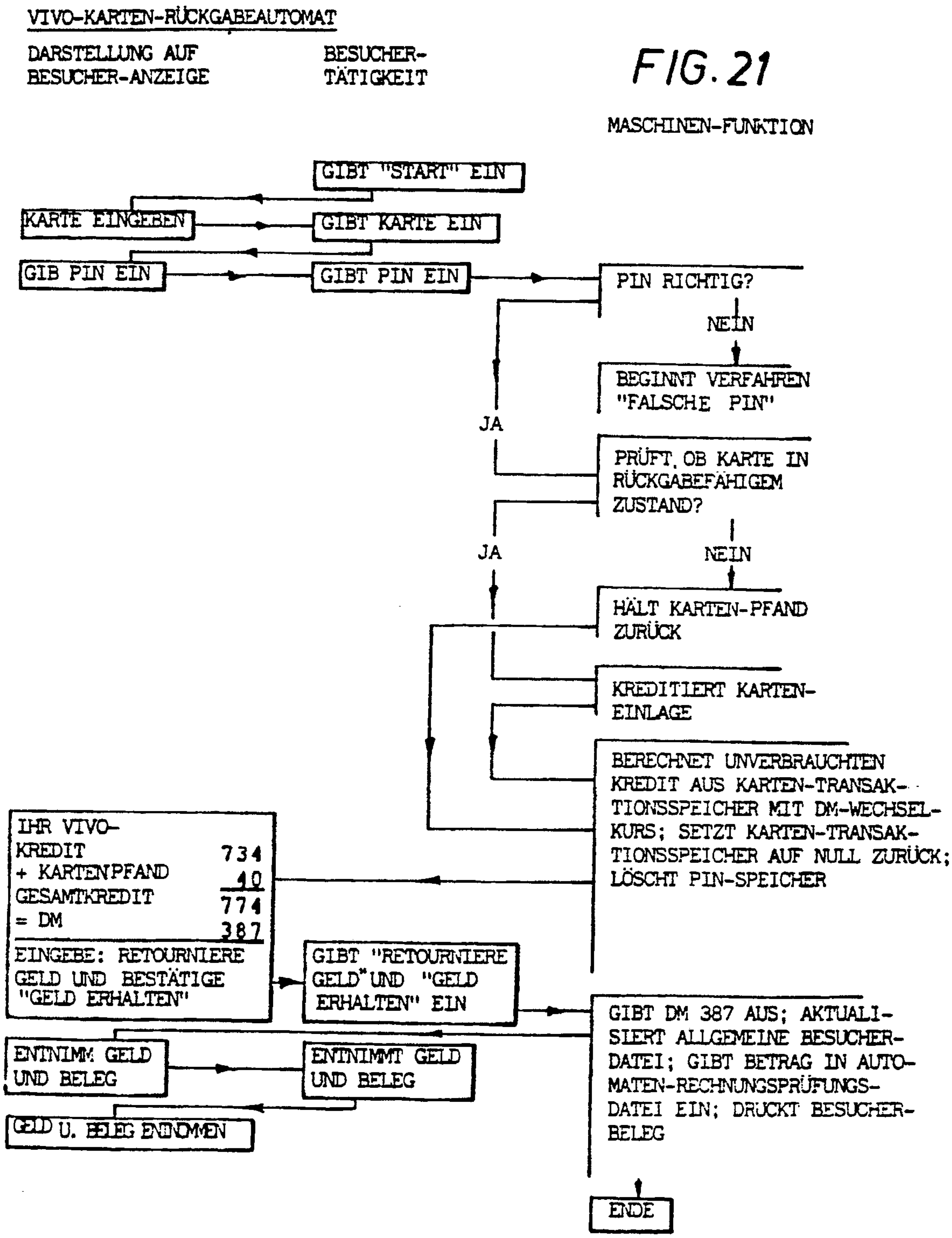
VIVO-KARTEN-RÜCKGABEAUTOMAT
DARSTELLUNG AUF BESUCHER-ANZEIGE
BESUCHER-TÄTIGKEIT
MASCHINEN-FUNKTION
GIBT "START" EIN
KARTE EINGEBEN
GIBT KARTE EIN
GIB PIN EIN
GIBT PIN EIN
PIN RICHTIG?
NEIN
BEGINNT VERFAHREN "FALSCHE PIN"
JA
PRÜFT, OB KARTE IN RÜCKGABEFÄHIGEM ZUSTAND?
JA
NEIN
HÄLT KARTEN-PFAND ZURÜCK
KREDITIERT KARTEN-EINLAGE
BERECHNET UNVERBRAUCHTEN KREDIT AUS KARTEN-TRANSAKTIONSSPEICHER MIT DM-WECHSELKURS; SETZT KARTEN-TRANSAKTIONSSPEICHER AUF NULL ZURÜCK; LÖSCHT PIN-SPEICHER
IHR VIVO-KREDIT 734
+ KARTENPFAND 40
GESAMTKREDIT 774
= DM 387
EINGEBE: RETOURNIERE GELD UND BESTÄTIGE "GELD ERHALTEN"
GIBT "RETOURNIERE GELD" UND "GELD ERHALTEN" EIN
GIBT DM 387 AUS; AKTUALISIERT ALLGEMEINE BESUCHER-DATEI; GIBT BETRAG IN AUTOMATEN-RECHNUNGSPRÜFUNGS-DATEI EIN; DRUCKT BESUCHER-BELEG
ENTNIMM GELD UND BELEG
ENTNIMMT GELD UND BELEG
GELD U. BELEG ENTNOMMEN
ENDE